## Europäisches Patentamt
## European Patent Office
## Office européen des brevets

(11) Publication number: **0 041 351**
**B1**

(12) **EUROPEAN PATENT SPECIFICATION**

(45) Date of publication of patent specification: **20.12.89**

(51) Int. Cl.⁴: **H 01 L 27/02, G 06 F 15/06**

(21) Application number: **81302300.9**

(22) Date of filing: **26.05.81**

(60) Divisional application 89110008.3 filed on 26/05/81.

(54) Modular data processing system.

(30) Priority: 29.05.80 US 154335
29.05.80 US 154339
29.05.80 US 154342
29.05.80 US 154554
29.05.80 US 154560
30.05.80 US 154710
29.05.80 US 154728

(43) Date of publication of application:
09.12.81 Bulletin 81/49

(45) Publication of the grant of the patent:
20.12.89 Bulletin 89/51

(84) Designated Contracting States:
DE FR GB NL

(56) References cited:
US-A-3 683 415

IEEE TRANSACTIONS ON CONSUMER
ELECTRONICS, vol.CE-26, no1, february 1980,
pages 81-93, IEEE, New York, US,
F.L.TOTH:"Low cost 8-bit single chip
microcomputer simplifies software andI/O
control in consumer applications"

(73) Proprietor: **TEXAS INSTRUMENTS
INCORPORATED**
13500 North Central Expressway
Dallas Texas 75265 (US)

(72) Inventor: **Tubbs, Graham S.**
9445 Concourse 258
Houston Texas (US)
Inventor: **Teza, Jeffrey R.**
7313 Cook Road
Houston Texas (US)
Inventor: **Hull, Charles G.**
1923 Klauke Court Rosenberg
Texas (US)
Inventor: **Lou, Perry W.**
9020 Wilcrest
Houston Texas (US)
Inventor: **Hunter, Arthur C.**
5717 80th Street
Lubbock Texas (US)
Inventor: **Brantingham, George L.**
4401 80th Street
Lubbock Texas (US)
Inventor: **Graber, Warren S.**
1438 Desmond
St. Joseph Michigan (US)

**EP 0 041 351 B1**

(56) References cited:

IBM TECHNICAL DISCLOSURE BULLETIN, vol.21, no.6, november 1978, pages 2451-2453, New York, US, R.S. CAPOWSKI et al.:"Channel address switching mechanism"

BAUTEILE REPORT SIEMENS, vol15, no.5, october 1977, pages 157-163, Munich, DE, H. PELKA:"Umgang mit Mikroprozessoren: Erweiterung des FAN-OUT der Daten- und Adressbusse: 3. Teil"

(72) Inventor: **Someshwar, Ashok H.**
**4505 Small Drive**
**Austin Texas (US)**
Inventor: **Lies, Kenneth A.**
**2703 53rd Street**
**Lubbock Texas (US)**
Inventor: **Housey, Lawrence J.**
**2403 Silver Holly**
**Richardson Texas (US)**

(74) Representative: **Abbott, David John et al**
**Abel & Imray Northumberland House 303-306**
**High Holborn**
**London, WC1V 7LH (GB)**

## Description

Background of the invention

This invention relates to data processing system and system modularity—the process and the means for implementing the process. More specifically, this invention is related to the application of the process and means of data processing system modularity to controller based units and particularly to hand held or desk model electronic calculators employing integrated circuits. Heretofore, the predominate methodology and means of implementing data processing system design required designing custom of semi-custom single chip or multi-chip integrated circuit data processing systems. The goals were determined by looking primarily to the integrated circuit chip sizes (which is directly proportional to its cost) and to electrical and performance data. A particular data processing integrated circuit or plurality of integrated circuits comprising a data processing system, is thus limited to a particular product such as a calculator or line of products. However, each line of products would typically contain different instruction sets, different I/O configurations, different packaging pinouts, and substantial re-layout with a re-design required to increase memory size, or to change the I/O structure, or to modify the pinout. Furthermore, even within a particular data processing integrated circuit system for a particular line of products, I/O changes, pinout changes, special functions, and in some cases memory size changes require substantial integrated circuit bar relayout and redesign. In some systems, additional read-only memory and read/write memory is added by means of designing separate integrated circuit chips with an I/O interface structure compatible to the controller to increase the memory capacity of the data processing system.

In present designs of semiconductor integrated circuits and particularly data processing integrated circuits, an input/output (I/O) reconfiguration of the underlying chip design typically necessitates a major redesign, or at least a relayout of the bar. Ideally, it is desirable to be able to redefine and redesign the I/O quickly and easily without major redesign, and without major relayout. Existing integrated circuit designs locate the desired buffer physically close to the pin to which it is to be coupled, and special select and control logic, which may or may not be physically located adjacent to the I/O buffer, is built to control and select the buffer. The control logic is comprised of power, data, and select/control lines which are coupled to the controlled buffer. If it is then desired to assign new pin locations to the buffer functions, it is necessary to physically move the existing buffers to the desired bonding pad locations, or to add new buffers, in either case requiring a relayout of the select/control lines of the control logic. This is a major design task which consumes much time and man power, and inhibits optimizing of integrated circuit designs by optimizing pinouts of the integrated circuits for compatibility with the specific design in which the circuits will be used.

Heretofore, both the true and complement of the address inputs were coupled to the address decode, and the address was decoded with either a programmable logic array (PLA) or with a static gate array. A key disadvantage of this technique is that both the true and complement address input signals are required for the decoder to properly operate. Thus, either inverters must be provided to couple to non-complementary inputs to provide a set of complementary inputs, which increases the bar size area of the semiconductor needed for the decode array, or both true and complementary address lines must be provided for, which increases the layout complexity and bar size of the overall integrated circuit upon which the decode array is to be located. Therefore, to minimize the number of interconnect lines and bar area required for the address decode, it is necessary to provide for decode without the use of complementary address inputs.

Heretofore, in data processing system design, each product or product group was comprised of a custom or semicustom integrated circuit and, optionally, additional memory or peripheral integrated circuits for coupling to the controller integrated circuit. All communications between the additional memory chips or peripheral chips and the controller chip was in a machine language which was directly executable by the processor portion of the controller integrated circuit. Thus, the additional read only memory integrated circuits formed but an extension of the read only memory integrated circuits contained within the controller integrated circuit itself. This allowed the controller integrated circuit to directly execute instruction sequences from either the on chip controller read only memory or the additional read only memory integrated circuit, or a combination of both. Thus, within a fixed functional format, a product family could be designed from a single custom controller integrated circuit, and multiple additional read only memory and peripheral integrated circuits could be added, depending on the desired degree of complexity, within the confines of the functional family desired. However, each functional family of products required a different custom controller integrated circuit with the machine language often varying between custom integrated circuits. This meant that additional read only memories for one product family chip set would be incompatable with the additional read only memories or a different product family chip set. Additionally, each product family chip set utilized different communications protocol, optimizing the design so as to minimize package count and pinout. Finally each controller chip set utilized a different instruction set, creating even further incompatibility between product families.

Heretofore, communication by multiple integrated circuits along a common bus line have utilized open collector or tri-level (logic 0, logic 1, and high impedance) logic devices to couple to the bus line. To prevent spurious communications, some means of controlling the default state of the bus line must be provided so that when all devices are in a default no op state, the bus line will be at a known logic level. Heretofore, this problem has been solved by the use of pullup or pulldown resistors, one end of the resistor coupled to the bus line and the other end of the resistor coupled to a power supply bus. This has the undesirable side effect of dissipating a large amount of power due to the resistive loss. Another solution has been to provide additional control lines to create a master slave protocol. Thus, a protocol is established between devices where at least one device has control of the bus at all times, and where that one device relinguishes the bus line and another device assumes control of that bus line. This approach has the disadvantage of requiring additional control lines and additional control logic, thereby increasing the size of each integrated circuit in the system and increasing the complexity and size required for the total system.

In the article "Low cost 8-bit single chip microcomputer simplifies software and I/O control in consumer applications" by Frank L. Toth, published in the IEEE Transections on Consumer Electronics, Vol. CE-26, No. 1, pp. 81—93 (February 1980) there is disclosed a basic microcomputer chip which provides a "kernal" data processor about which a family of pseudo-custom devices can be built, so as to provide ready expansion of the basic architecture by the addition of RAM, ROM and input/output circuitry to suit a range of consumer applications.

An object of the present invention is to provide an improved modular data processing system in integrated circuit form.

According to the present invention there is provided a method of manufacturing an integrated circuit of modular structure formed on one surface of a semiconductor bar, said method comprising:

patterning on a replica of the integrated circuit to be manufactured as formed on said one surface of said semiconductor bar, a replica of a standard data processor circuit having an arithmetic logic unit, a program counter, memory pointers and a permanent section of memory means including read/write (RAM) and read-only (ROM) memory electrically interconnected by a first interconnect means in a manner facilitating expansion of the storage area accorded to said RAM and ROM memory means;

characterized in that the expansion of the storage area accorded to said RAM and ROM memory means is accomplished by patterning on the replica of the integrated circuit, a replica of additional RAM and ROM memory means in the form of partionable segmented modular blocks;

electrically interconnecting on the replica of the integrated circuit the additional RAM and ROM memory means via second interconnect means with the replica of said standard data processor circuit in a manner so that individual modular blocks of additional RAM and ROM memory means may be removed from the replica of said integrated circuit without disturbing the electrical operation of said standard data processor circuit and any remaining segmented modular blocks of additional RAM and ROM memory means retained on the replica of said integrated circuit;

establishing a minimum memory requirement for the integrated circuit to be manufactured; and

if necessary, removing individual modular blocks of additoinal RAM and ROM memory means from the replica of said integrated circuit as memory storage in excess of said minimum memory requirement for the integrated circuit to be manufactured; and

transforming the replica into the integrated circuit.

A modular integrated circuit may provide a single controller for use in implementing a variety of data processing system designs from the single integrated circuit controller modular chip design. In a preferred embodiment, an integrated circuit system on a surface of a semiconductor substrate is comprised of a nonmodular logic circuit, which may contain an ALU, instruction decoder, bus structure, and a small amount of RAM and a small amount of ROM with associated RAM and ROM control logic, the nonmodular logic circuit performing selected logic functions on data in accordance with stored instructions. Additionally, the integrated circuit system is comprised of a partitionable modular memory circuit coupled to the nonmodular logic circuit for storing the instruction set. The partitional modular memory circuit, which may be either ROM or RAM, is comprised of a plurality of memory cells, and address circuit means for addressing said memory cells, the memory circuit being partitioned to include a minimum number of blocks of memory cells required to store the instruction set required for a given application, and including only a sufficient modular portion of the address circuit means required to address said minimum number of blocks of memory cells. As a result, the size of the semiconductor substrate is minimized in accordance with the needs of the particular application.

The nonmodular logic circuit and partitionable modular memory circuit is positioned on the integrated circuit substrate so that removal of modular blocks of the partitionable memory circuit can be performed without requiring relayout and without affecting the first logic means or interconnection thereto. In the preferred embodiment, an integrated circuit formed upon one surface of a rectangular semiconductor bar having four edges is comprised of a first logic circuit, positioned adjacent to a first edge of the bar, for providing fixed functions including data processing, and is further comprised of memory means coupled to the first logic means positioned adjacent to a second edge of the semiconductor bar parallel to the first edge, for providing partitionable segmented memory cells with associated decode such that the second edge of the bar may be displaced towards the first edge of modular scribe lines in proportion to the number of partitions of segmented memory cells with associated decode which is present on the integrated circuit. Thus, the bar size area and the memory means storage capacity are reduced and minimized without requiring relayout and without affecting the first logic means or interconnection thereto. Furthermore, in the preferred embodiment, the partitionable segmented memory cells are aligned adjacent with the associated decode, and the associated decode is a partitionable segmented structure so that each partitionable segment of the associated decode is aligned parallel to the partitionable segments of the memory cells with which it is associated. In this embodiment, the associated decode partitionable segments are of equal width to the associated partitionable segmented memory cells, so that removing the partitionable segment memory cells along a scribe line parallel to the second edge also removes the associated partitionable segments of the decode. In the preferred embodiment, the memory means may be comprised of read/write memory means or read only memory means, or both.

A solution to the problem of rigid I/O design is to provide a modular I/O design. First, each I/O buffer may be treated by the logic of the integrated circuit as an addressable element of memory (memory bit). The I/O buffer can then be addressed and either written into or read from. Next, each buffer may have its own associated memory address decode. This allows common address, data, and control and clock lines (buses) to be coupled in parallel to each of the I/O buffer locations, where each buffer has its own associated address decode which individually decodes its own predefined select address, and is selectively either written into or read from. This eliminates the need for special select and control lines for each of the buffers. Only an address and data bus are required to be coupled to the buffers and associated decode logic, and a common address and a common data bus may be utilized. To address 16 I/O buffers only four address lines are required for selection of one of the 16 buffers. Thus, any individual buffer with its associated address decode can be physically located at any location along this address/data bus, and there is no necessity to relayout the select/control lines specific to each individual buffer when changing pinout. The buffers with associated address decode along a common address/data bus provides for a memory mapped I/O system when the self address decode capability is associated with each buffer. Thus no change of the interconnect between the buffers and associated decode or between the buffers and the bonding pads, or between the associated decode and the memory mapped I/O bus is required to reconfigure the pinout buffer functions and therefore the pinout. To reduce bar layout complexity and bar size area, the address and data lines may be multiplexed together on a common bus coupled to the buffers and to the address decode associated therewith. This results in fewer required lines in the I/O bus. When a first buffer is the same as a second buffer, then simply reprogramming the decode address of the address decode associated with a particular buffer redefines the function of the buffer and the pin-out associated therewith. Alternatively, the address decodes associated with each of the first and second buffers could be swapped, that is, physically be interchanged so as to be associated with each of the second and first buffer, respectively, retaining the same program decode address. Alternatively, if it is desired to retain the same address decode location with a different type of buffer, the initial buffer may be replaced or swapped with a buffer of the desired type and coupled to the original address decode (and bonding pad) to which the initial buffer was associated with. By this method, optimal buffer size is achieved, while retaining I/O modularity and pin-out definition modularity. Each buffer has associated with it an associated addres decode circuit which is selectively programmed so as to enable the associated buffer in response to decoding a predefined select address. Thus, by changing the programmed select address the buffer function can be redefined.

There are many ways to organize the data bus and to lay out the input/output logic to create a modular input/output system. The I/O bus may be distributed around the whole perimeter of the bar, and each individual buffer and associated address decode may be located by and coupled to the bonding pads. The address to which each buffer will respond is controlled by programming a selected address into the associated address decode by hardwire programming, such as via gate or metal level masks during processing, via ion implants, or via electrically programming after completion of processing. Each buffer and associated decode is therefore located physically adjacent its respective bonding pad.

A programmable interconnect contact matrix may be interposed between the outputs of the buffers and the metal lines coupling to the bonding pads. By providing a selection pattern or program for the interconnect matrix, the coupling of the output from the buffers to the bonding pad locations, which couple to form the external pin-out, may be modified independent of the buffer locations or the selected address decode for any given buffer.

The I/O data bus may run along one edge of the semiconductor bar and all buffers and associated decode may be placed along a straight line beneath and coupled to the I/O data bus. The metal interconnect may run from the buffers to the interconnect matrix and therefrom to the desired bonding pad. This provides the option of not having to physically remove a buffer and associated decode to a new bonding pad location in order to couple that buffer and associated decode to the new bonding pad. Rather, by varying the metal interconnect contact matrix by means of hardwire programming (such as gate or metal level mask programming during processing, ion implant, or electrically programming after processing, the coupling between the outputs of the buffers and the bonding pads is accomplished without physical relocation or relayout of the semiconductor bar. A group of metal lines couples each output from a respective buffer to a respective first side location in the matrix and an equal number of metal lines couples from a respective second side location in the matrix to a respective bonding pad. The chip designer may select an individual buffer for coupling and program the interconnect contact matrix so as to couple the buffer to a particular metal line coupling to a particular bonding pad, without relayout or redesign. To exchange the coupling arrangement between two different species of buffers and associated bonding pads, for example, swapping a K line with a select line would require physically removing and relocating the buffers. This may be accomplished without the relocation of the buffers by reprogramming the interconnect contact matrix so as to couple the metal interconnect from the desired buffer to the desired metal line coupling to the desired bonding pad. Although the I/O buffers may be designed so that each one may be programmed for any one of several different functions, each buffer may have a specific function, so as to achieve optimal system circuit design and minimal bar area. Where it is desired to change bonding pad connections within and among any of the same types of buffers, redefining the decode program in the hardware programmable address decode of the associated address decode logic of the different buffers will change the function of the associated bonding pad. The interconnect matrix may be redefined as described above to accomplish the same end result, and may additionally allow pinout redefinition among different species of buffers.

One general purpose buffer may be provided which fulfills all the functions that are required by the system. This general purpose buffer would be physically larger than the largest function buffer used. This would allow the hardware programmable address feature of the buffers to accommodate complete changes of bonding pad functions irrespective of the particular species of function to be output. However, by optimizing buffer size for each function, more buffers may be fitted in a given area of semiconductor bar.

The addressable function modules may be comprised of a bus means coupled to the decode circuitry, including address means for providing noncomplementary address outputs and power bus means for providing a first voltage output at a first level, and a second voltage output at a second level. The address decode circuit having noncomplementary address inputs may comprise a first decode circuit for receiving the address inputs and for selectively providing an active first decode output in response to decoding a first logic level in a predefined combination from the received address inputs; and a second decode circuit for receiving the address inputs, and coupled to the first decode circuit, for selectively providing an active second decode output in response to decoding a second logic level in the predefined combination from the received address inputs and into receiving the active first decode output. The active second decode output is indicative that the condition of the address inputs are corresponding to the predefined combination. The decode circuit may be programmable to allow for selection of the desired predefined combination at the first and second logic levels, so as to provide an active second decode output when the predefined combination is received on the address inputs. The first decode means may be comprised of an array of parallel transistors, an input to each transistor in the array being coupled to an independent and separate address input, and each transistor within the array being selectively open circuitable in response to a programmed first matrix input. Additionally, the second decode means may be comprised of an array of transistors in series connection, an input of each transistor in each said array being coupled to an independent and separate address input, each of said transistors in said array being selectively short circuitable in response to receiving a programmed second matrix input.

A modular calculator system design utilizing a common controller integrated circuit may have a code conversion means contained therein. The code conversion means may be in part comprised of the read only memory portion of the controller integrated circuit, and the additional read only memory coupled thereto may contain instructions in code other than that executable by the processor portion of the controller chip. Thus, a single universal controller integrated circuit may be utilized for all functional groups of data processing circuits, necessitating only a change in the additional read only memory to effectuate a redefinition of the calculator function. Additionally, all additional read only memories, irrespective of the desired data processing function or desired level of complexity for the data processing function may be written in a single universal high level language code which is translated by the conversion means within the controller integrated circuit to a code executable by the processor portion of the controller integrated circuit. Thus, programmer familiarity and expertise with a single high level programming language is made possible and may be utilized for a variety of calculator system designs. Additionally, a single data processing system design is provided for wherein the housing, display, keyboard printed circuit board, and controller integrated circuit may be utilized irrespective of the ultimate data processing function to be performed, the data processing function being defined by the additional read only memories coupled to the controller integrated circuit. These features reduce the design cost and turnaround time associated with new data processing system design.

The default state of a bus line may be controlled without requiring pull up or pull down resistors and without requiring additional control lines. A read/write memory bit (bus control memory bit) may be coupled to the bus line which is to be controlled, forming a transparent latch. A protocol is established wherein the last integrated circuit device to write onto the bus line must set the bus line to the default (no op) condition. The default condition may be a logic 0 level. The bus control memory bit is sized so that it may be overdriven by any driver attached to the bus line. This approach has the advantage of dissipating virtually no power once the line has been set to one or the other logic level. A pulldown latch of the present invention may be included within the controller integrated circuit. The bus line control bit is programmed onto the bus line by the last communicating integrated circuit at the end of a bus line transfer utilizing the bus line. Only one bus line control bit may be coupled to any given bus line so as to ease the task of overdriving the bus line. Thus, a single control bit may be coupled to each bus line of the I/O bus which couples between the controller integrated circuits and numerous RAM, ROM and other I/O integrated circuits.

Brief description of the drawings

The novel features believed characteristic of the invention are set forth in the appended claims. The invention itself, however, as well as a preferred mode of use, further objects, and advantages thereof, will be best understood by reference to the following detailed description of illustrative embodiments when read in conjunction with the accompanying drawings, wherein:

Fig. 1 is a pictoral view of a portable, electronic, handheld calculator;

Fig. 2 is a bottom view of the calculator of Fig. 1 showing the placement of major components;

Fig. 3 is a side view of the calculator system of Fig. 1 and 2 detailing the relative placement of components within the calculator housing;

Figs. 4A-D are functional block diagrams of embodiments of a modular system design;

Figs. 5A-C form a detailed schematic logic diagram of a preferred embodiment of the modular calculator system of Figs. 4A-B implemented in the calculator of Fig. 2;

Figs. 6-8 are bar layout block diagrams of a preferred embdoiment of a modular controller integrated circuit of the controller means 30 of Figs. 4A-D showing three levels modular layout reduction;

Fig. 9 is a combined axis graph showing yield per slice and cost per bar as plotted against integrated circuit bar size;

Fig. 10 is a plot of cost v, cumulative volume, showing the semiconductor learning curve as applied to the integrated circuit designs of Figs. 6-8;

Fig. 11 is a flow chart showing a method of manufacturing a modular integrated circuit as described with reference to Figs. 6-8;

Figs. 12A-B are detailed functional block diagrams of a modular memory mapped I/O interconnection scheme, wherein each buffer has associated with it an individual address decode logic circuit, for use in the controller integrated circuit 30 of Figs. 4A-D;

Figs. 13A-B are functional block diagrams of a programmable pinout interconnect means which may be employed in the controller 30 of Figs. 4A-D, and in the modular integrated circuit designs of Figs. 6-8;

Figs. 14A-B together form block diagram of a preferred embodiment of the memory mapped I/O in a modular controller integrated circuit as described with reference with Figs. 12A-B and 13A-B;

Fig. 15 shows the layout interrelationship of Figs. 16A-D;

Figs. 16A-D show detailed schematic representations of functional blocks from Figs. 14A-B;

Fig. 17 shows the layout interrelationship of Figs. 18A-F;

Figs. 18A-F are detailed schematic representations of the timekeeping logic and associated address decode of Fig. 14B;

Fig. 19 is a schematic interrelationship diagram of Figs. 20A-C;

Figs. 20A-C are a detailed schematic representation of the I/O Oscillator, I/O clock generator, and logic associated therewith as described with reference to Fig. 14B;

Fig. 21 is a detailed schematic diagram of the display voltage generator of Fig. 14B;

Fig. 22 is a block diagram of the address decode means of Figs. 14A-B;

Fig. 23 is a detailed schematic embodiment of the address decode circuit of Fig. 22;

Fig. 24 is a signal timing diagram for the circuitry of Fig. 23;

Fig. 25 is a partial schematic partial block diagram of a preferred embodiment of an I/O pull down latch as contained within a controller integrated circuit, as described with reference to Fig. 16D.

Detailed description of the invention

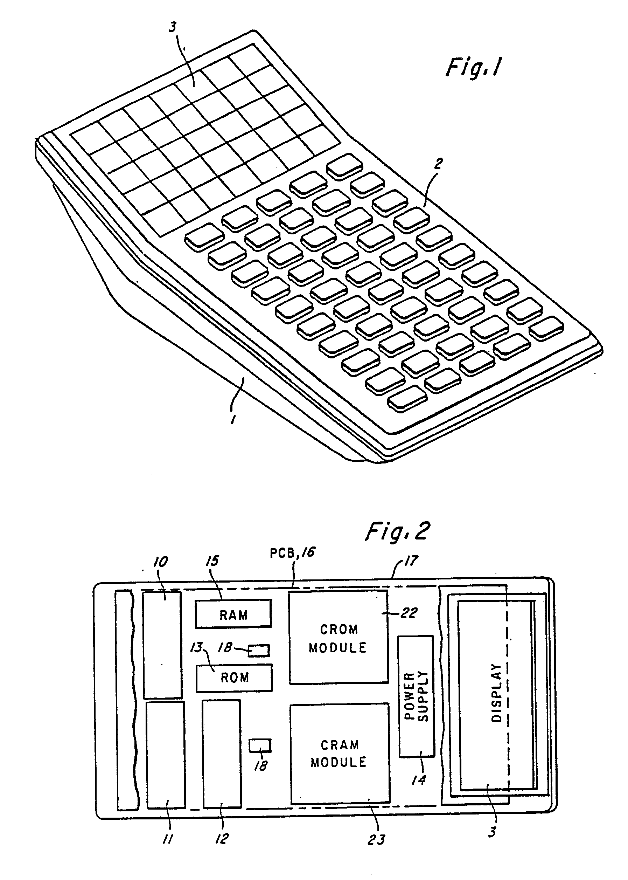

Referring to Fig. 1, an electronic portable calculator of the type wherein the various features of this invention are embodied in pictoral form. The calculator 1 comprises the keyboard 2, and the display 3. Display 3, in the preferred embodiment, consists of 16 alpha-numeric characters, each provided by liquid crystal display devices, or an array of light emitting diodes, a vacuum florescent tube display, or other display means. The display is preferably implemented having complete alpha-numeric display capability so as to be capable of displaying English language messages as well as permitting the display of data in scientific notation, or other output formats. Of course, the type of display and the number of digits displayed is a design choice. The display may be of the 7 segment, 8 segment, 9 segment, 13 segment, or 5×7 dot matrix display character, depending on the character display flexibility desired. In a preferred embodiment, a 5×7 dot matrix per character position is utilized to allow for complete alpha-numeric and special character display. A keyboard 2, or other input means, preferably includes a set of number keys (0—9), a decimal point key, a plurality of function command keys including, for example, exponential, logarithmic, trigonometric and hierarchy functions. The expotential and logarithmetic function command keys include, for example, $X^2$, $\sqrt{X}$, $1/X$, $\log X$, $1nX$, $yx$, and $y\sqrt{X}$. The trigonometric functions include, for instance, the sine, cosine, tangent, and their inverses, the hyperbolic sine, hyperbolic cosine, and hyperbolic tangent, and inverse hyperbolic functions. Other function command keys include store (STO), and recall (RCL) keys for respectively storing and recalling a number stored in one of the memory registers. The enter exponent key (EE) allows exponent entry of the number displayed in scientific notation. A +/− key is provided for changing the sign of the display number. An exchange key (X:Y) is provided for exchanging operator and operand of an arithmetic function. More conventional function command keys are supplied, including the clear key (C), the clear entry key (CE) and the plus (+), minus (−), multiply (×), divide (÷), and equal (=) keys. Other function keys, in a preferred embodiment, include alpha-numeric variable keys (A-Z), parenthesis keys, hierarchy control keys, label key (LBL), and programmable feature function keys. The calculator is further provided with OP code keys for performing special functions such as slope, intercept, plotting operations, alpha-numeric operations, operating system hierarchy interface and control and the like.

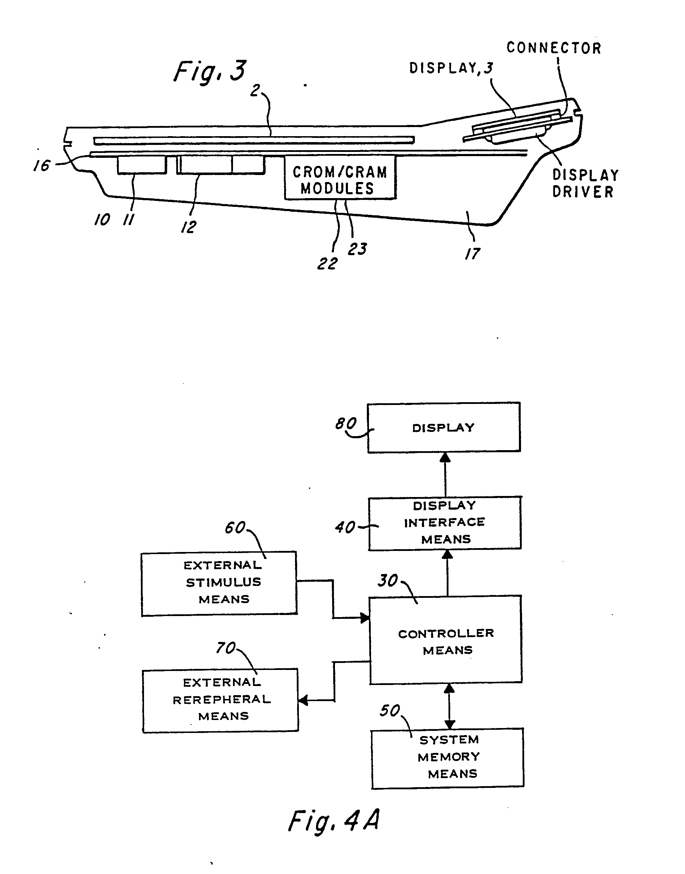

Referring to Fig. 2, a bottom view of the calculator 1 of Fig. 1 is shown. The placement of major components in a preferred embodiment of the calculator of Fig. 1 is shown. Controller integrated circuit chips 10, 11, and 12 provide the intelligence and control capabilities of the calculator system. Read/write memory 15, and read only memory 13, provide additional base system data storage beyond that provided on the controller chips 10, 11, and 12. A power supply 14 provides all necessary working voltages to the remainder of the calculator system's electronic components. The controller devices 10, 11 and 12, the read/write memory 15, the read only memory 13, and the power supply 14 are mounted to a main printed circuit board 16 within a calculator case 17. Additionally, compartments 20 and 21 within the calculator case 17 are coupled to the main printed circuit board 16 to allow for interconnection of plug-in memory modules 22 and 23 for interconnection to the controller chips 10, 11 and 12.

Referring to Fig. 3, a side view of the calculator system of Fig. 1 and 2 is shown, detailing the relative placement of the controller chips 10, 11 and 12, the display 3, the keyboard 2, printed circuit board 16, and the memory modules 22 and 23, within the calcualtor case housing 17.

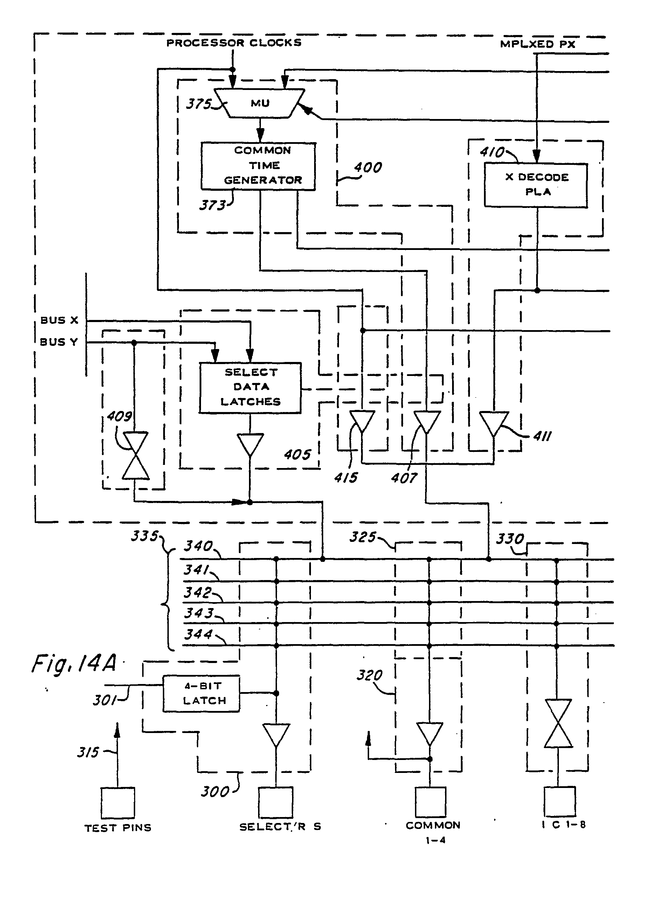

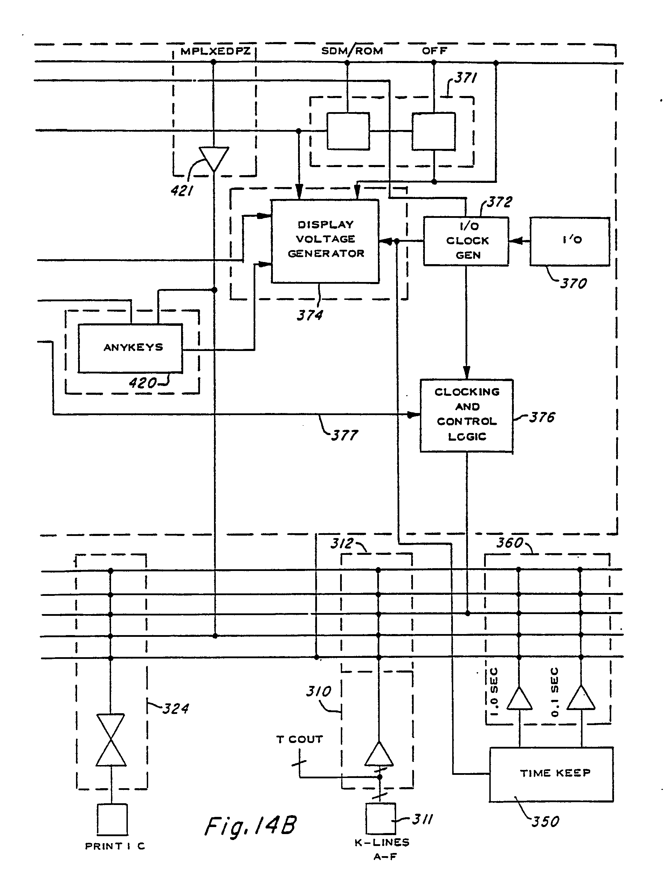

Referring to Figs. 4A-D block diagrams of alternate embodiments a modular system design of the present invention are shown. Referring to Figs. 4A-B. modular controller means 30 is comprised of at least one controller integrated circuit 31 having modular bar size, modular bar I/O, and on bar functional modularity interchangeability within the integrated circuit 31. The controller means 30 provides the central processing capability of the modular system. The controller means 30 comprises a single modular integrated circuit controller 31, or a plurality of modular integrated circuit controllers 31 interactively forming the controller means 30. In a preferred embodiment, each modular integrated circuit controller 31 is comprised of fixed logic including data processing logic, instruction decode, and other processing and decoding logic functions; modular input and modular output interface means; and partitionable blocks of modular memory including read/write memory means and read only memory means. The controller means 30 is coupled to display interface means 40, to system memory means 50, to external input stimulus means 60, and to external peripheral means 70. The display interface means 40 may be comprised of cascadeable display drivers including a master driver and at least one slave driver. Each display driver, master and slave, individually controls sectional blocks of characters of the display 80. The display 80 may be comprised of audible and/ or visual representation indicative of a received display signal. Alternatively, the display interface means 40 may be included with the controller means 30. The display interface means 40 is coupled to the display 80 for providing communications to and power for the display 80. The controller means 30, in a preferred embodiment, communicates only with the master display driver 41, with the master display driver 41 cascading an output to provide communication to the slave display drivers 42, thereby providing for uniform and simplified controller means 30 to display 80 interface, irrespective of the number of characters in the display 80. The system memory means 50 provides additional data storage capability for the controller means 30. In a preferred embodiment, the system memory means 50 is comprised of individual modules of read/write and read only memory means, such as the read/write memory 15, read only memory 13, and the plug-in memory means 22 and 23 as described with reference to Fig. 2. A common communication bus 35 couples the controller means 30 to the read/write and read only memory means of the system memory means 50, as described in greater detail with reference to Figs. 14-16, and Fig. 26, infra. The external stimulus means 60 is comprised of keyboard input means, external digital data storage means such as magnetic tape, card, or disk, or digital communication means such as a modem. The external peripheral means 70 provides for communication from the controller means 30 to the ultimate user. The external peripheral means 70 is comprised of a hard copy printer, video display, or alternatively provides for non-volatile data storage.

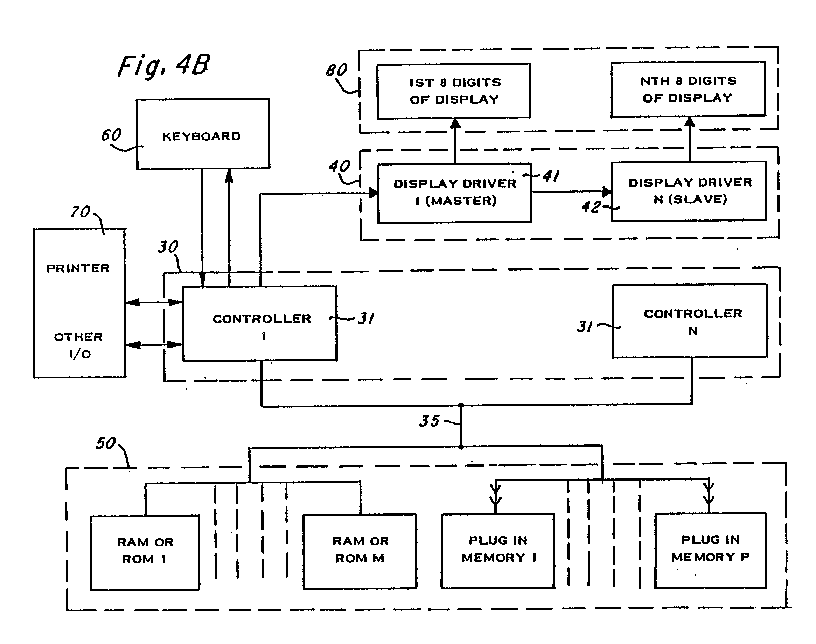

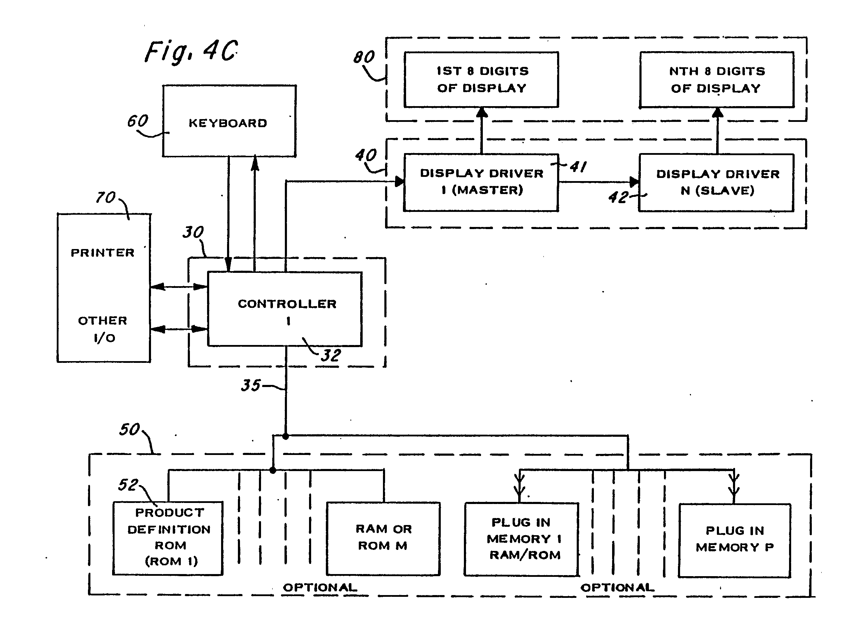

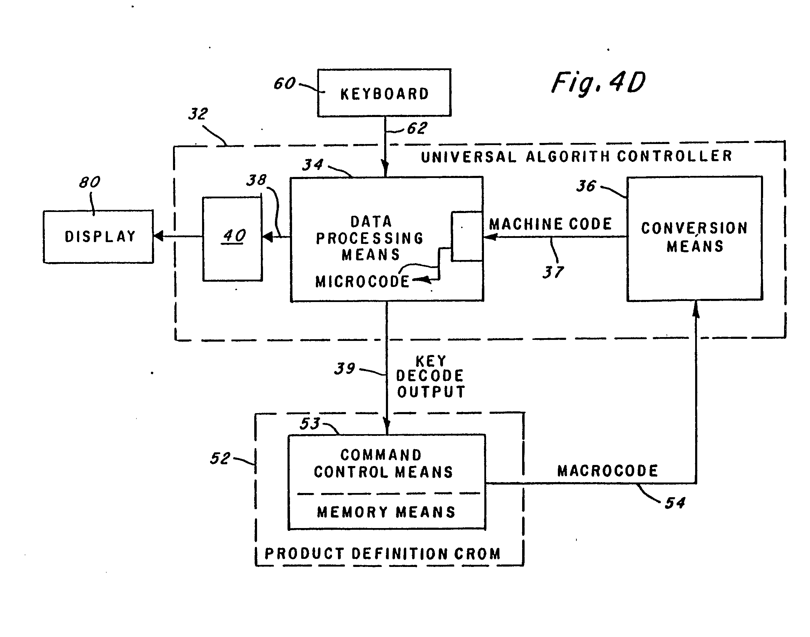

Referring to Fig. 4c, a block diagram of an alternative embodiment of the modular system of the present invention is shown. The block diagram of Fig. 4c is similar to that of Fig. 4b except that in the alternative embodiment the controller means 30 and memory means 50 are different than those shown in Fig. 4. The controller means 30 is comprised of a universal algorithm controller 32 coupled to the keyboard input means 60, the printer means 70, and the display driver means 40. The display driver means 40 couples to the display 80. Alternatively, the display driver means 40 is included within the universal algorithm controller integrated circuit 32. Furthermore, the universal algorithm controller 32 is coupled to a product definition ROM 52 in the memory means 50. Additionally, the universal algorithm controller 32 may be coupled to additional RAM and ROM memories within the memory means 50, either as a fixed part of the calculator system, or as plug in memories, as descirbed with reference to Figs. 2-3.

Referring to Fig. 4d, a detailed block diagram of the universal algorithm controller embodiment of the present invention is shown. The keyboard 60 selectively provides input signals 62 responsive to user provided key activations. The universal algorithm controller integrated circuit 32 is coupled to the keyboard input means 60, and to a command control means 52 comprising the product definition ROM. Additionally, the universal algorithm controller 32 provides an output 35 to drive the display 80. The universal algorithm controller 32 is comprised of a data processing means 34, coupled to the keyboard input means 60, for providing an operation signal, such as a key decode output 39, indicative of the received input signal 62 from the keyboard means, and for providing a display signal 38 in response to receiving an instruction signal 37. A code conversion means 36 is coupled to the data processing means 34 for providing a selected machine code instruction signal 37 in response to receiving a macrocode command signal 54 from the product definition ROM 52. The command control means 53 of the product definition ROM 52 is coupled to the data processing means 34 and to the code conversion means 36 for providing the command signal output 54 in response to receiving the key decode operation signal 39. The unique calculator functions to be performed are stored in macrocode in the memory means 50, including the product definition ROM 52, and may be supplemented by the plug in memories for a new calculator design.

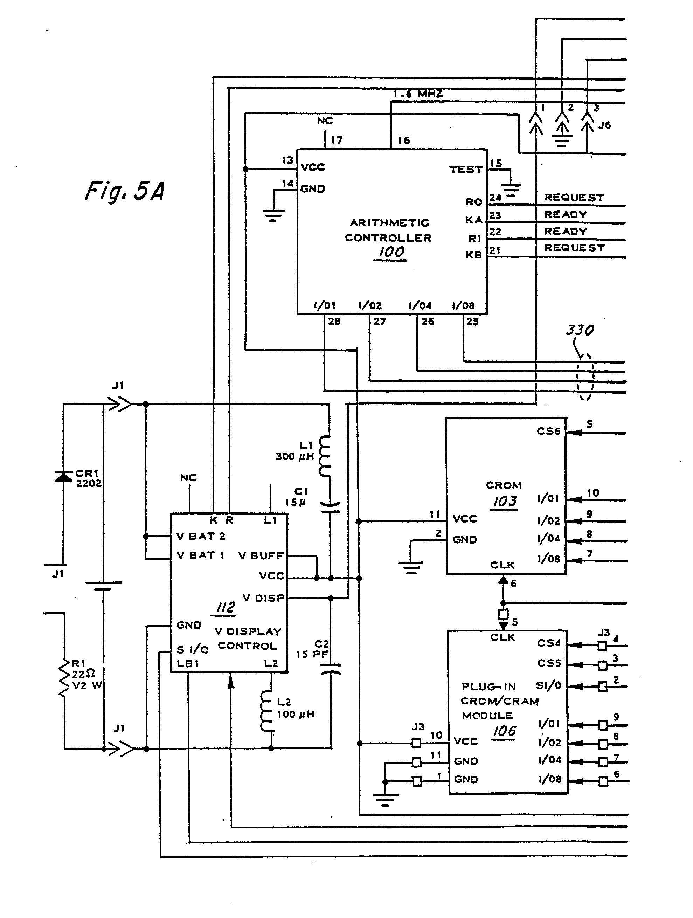

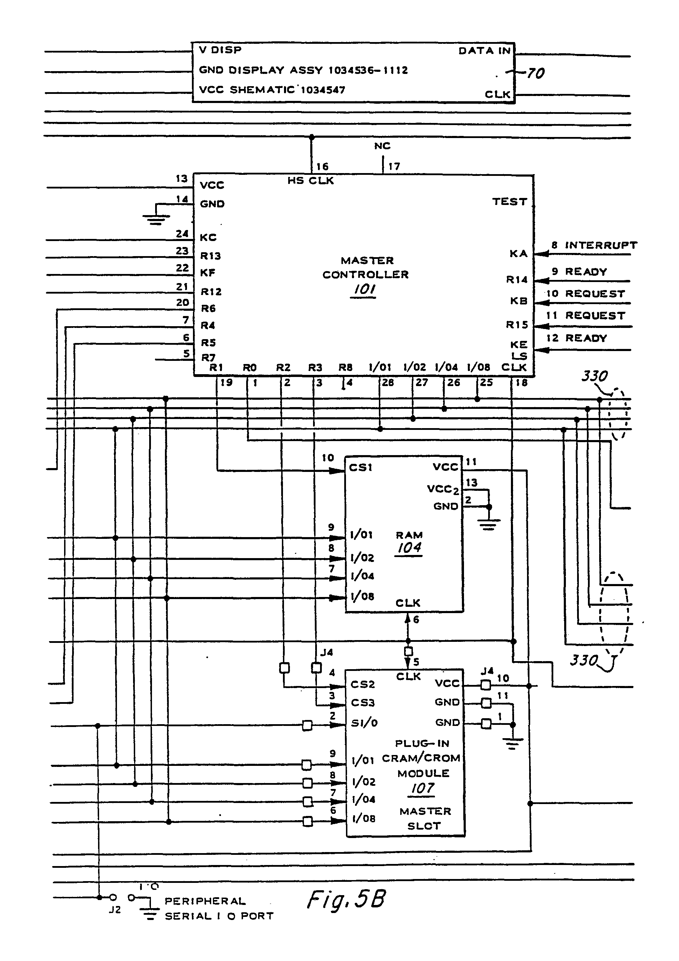

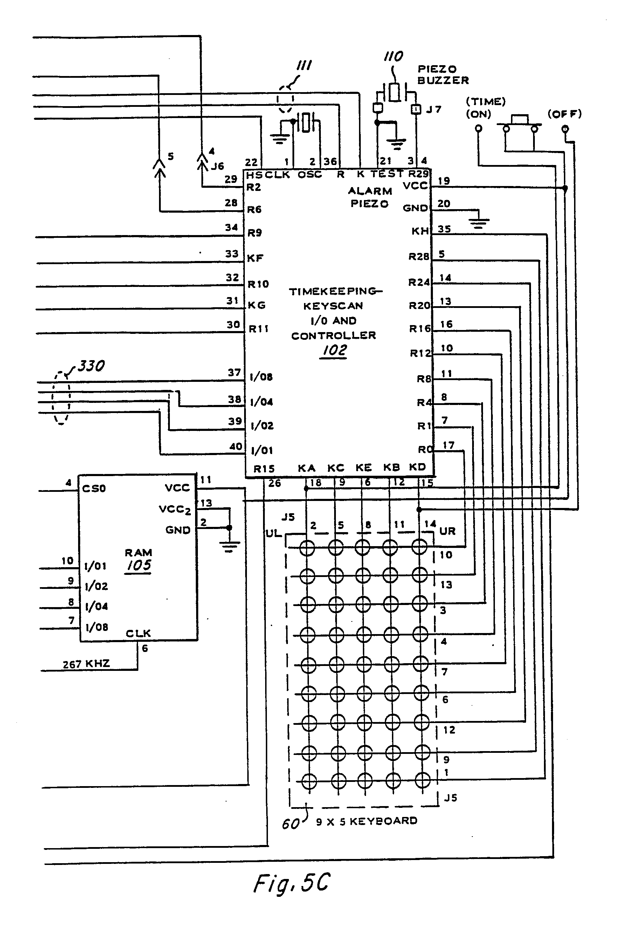

Referring to Figs. 5A-C, a detailed schematic of an embodiment of the modular calculator system of Figs. 4A-B as implemented in the calculator 1 of Fig. 2 is shown.

The calculator system of Figs. 5A-C is comprised of the controller means 30, as shown in Figs. 4A-B, expandable in functional blocks, for providing arithmetic processing and data manipulation and processing such as the arithmetic controller 100, master controller 101 and timekeeping I/O controller 102; input means, such as the keyboard 60, coupled to the controller means 30, for providing outputs to the controller means in response to an externally supplied stimulus; memory means 50 such as the memory 103, 104, 105, 106, and 107, expandable in partitioned blocks, coupled to the controller means 30, for storing data and providing data outputs to the controller means 30 in response to receiving select inputs; display interface means, such as cascadable display drivers 70 and display interface chip 12, expandable in partitioned blocks, coupled to the controller means 30, for receiving outputs from the controller means 30 representative of a desired character display, and providing display drive outputs corresponding to the desired character display compatable in voltage and timing with a particularly display technology such as a liquid crystal display; and display means such as a liquid crystal display, expandable in partitioned block corresponding to the partitioned blocks of the display interface means and connected thereto, the display means being of the particular display technology compatable with the display interface means and timing such as that output from that controller 112, for receiving the outputs from the display interface means and for providing a visable representation of the desired character display in response thereto. The cascadable display driver 70 is comprised of a master display driver and at least one slave display driver, each display driver forming a partioned block of the display interface means, and the master display driver being coupled to the controller means and coupled to one of the slave display drivers, the master display driver converting a received output from the controller means into a slave communication output for connection to the one slave display driver, all other slave display drivers being connected in daisy chain with said one slave display driver, each slave display driver coupling the slave communication from the proceeding slave display driver to the next slave display driver and providing outputs to the succeeding display slave driver.

In the preferred embodiment, the calculator system of Figs. 5A-C is comprised of the controller means 30 expandable in functional blocks, for providing arithmetic processing and data manipulation and processing in the master controller 101, and timekeeping I/O functions in controller 102. In the preferred embodiment, the controller 100 of Fig. 5A is combined to be contained with the controller 101. The master controller 101 is coupled to the I/O controller 102 to allow for communication between the individual controllers. The memory means 50 of Figs. 4A-B is shown in Figs. 5A-C as comprised of on board read only memory 103 and on-board read write memories 104 and 105, as well as plug-in memories 106 and 107 which may be either read only, read/write or a combination thereof. The external stimulus means 60 is shown in part as a 9×5 keyboard coupled to the I/O controller 102 of the controller means 30. Additionally, the I/O controller 102 may be coupled to an external peripheral piezoelectric buzzer 110, and has provisions for connection to an additional external peripheral, such as printer connection 111. The display interface 40 is comprised of the cascadable display drivers 70 and the display interface voltage controller chip 112. The display voltage controller chip provides regulated multi-voltage power source supplies to the integrated circuit chips of the calculator system of Figs. 5A-C, and voltages for coupling to the display driver which generates its own multiple voltages.

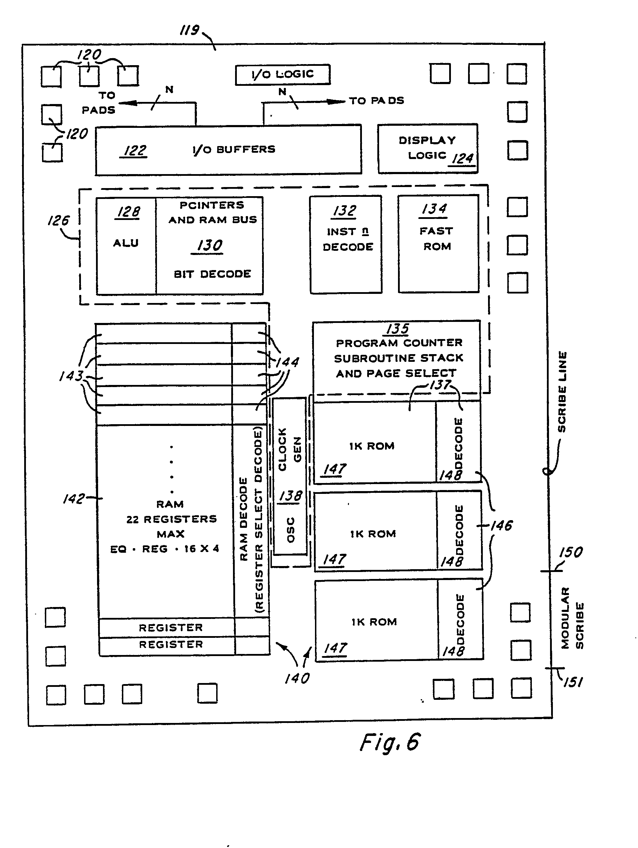

Referring to Fig. 6, a layout block diagram of a perferred embodiment of a modular controller chip of the controller means 30 of Figs. 4A-D is shown. Bonding pads 120 are distributed along the external periphery of integrated circuit chip 119. A modular input/output buffer and interconnect (I/O) means 122 is laid adjacent a first edge of the integrated circuit chip 119, and is selectively coupled to the bonding pads 120. Display logic 124 provides an additional level of functional modularity to the integrated circuit chip 119 and may be deleted from the layout or left in the design as required by the end application. The display logic 124 provides voltage buffering and timing interface for interconnection of the integrated circuit chip 119 to an external liquid crsytal display or other type of alphanumeric or graphic display. A common block of logic forming non-modular circuit group 126 is comprised of fixed circuit function groups for providing dataprocessing and manipulation in accordacne with a stored instruction set. The circuit group 126 is comprised of an arithmetic logic unit 128, address pointers, and RAM bus and bit decode circuit means 130, instruction decode circuit means 132, high speed (fast) read only memory (ROM) 134, and program counter, subroutine stack, and page select circuit means 135. A clock generator means 138, although forming a function block of the circuit group 126, may be physically relocated on the integrated circuit chip 119 closer towards the first edge as necessary to accommodate a smaller bar size. In the preferred embodiment, the circuit group 126 is located physically adjacent to the I/O means 122. A partitionable modular memory circuit 140 is physically located adjacent to the circuit group 126 and coupled thereto. Additionally, the memory circuit 140 is physically located adjacent to a second edge of the integrated circuit chip 119 parallel to and opposite from the first edge. In the preferred embodiment, the memory circuit 140 is comprised of a partitionable modular read write memory circuit (RAM) 142 and a partitionable modular read only memory circuit (ROM) 146. The read write memory circuit 142 is comprised of read write memory cells grouped into partitionable registers 143 and register select decode grouped into partitionable decode circuits 144, with each partitionable decode circuit 144 being associated with and adjacent to a partitionable register 143, so as to provide for modular partitionable registers 143 each with its own associated decode 144. The read only memory circuit 146 is comprised of a plurality of memory cells grouped into pages 147 (in the preferred embodiment each page comprising 1024 words), each page being partitionable and independent of each other page, and address decode means partitioned into modular decode circuits 148, each decode circuit 148 being adjacent to and associated with a partitionable page 147 so as to allow addressing of particular locations within the associated page. The invention may be more easily understood by comparing Figs. 6, 7 and 8.

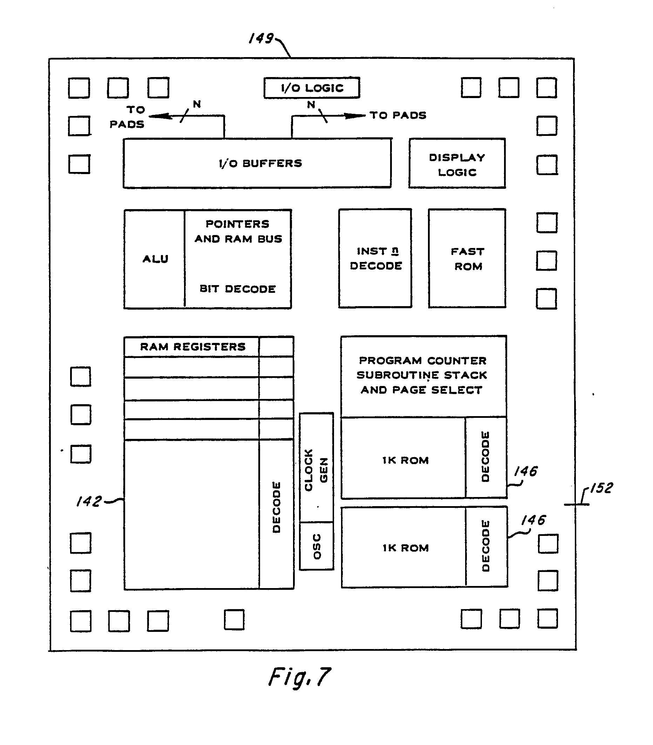

Due to the modular layout and circuit design of the integrated circuit 119 of Fig. 6, partitioned segments of the modular memory means 142 and 146 may be removed from the integrated circuit design bar, substantially without relayout and without circuit redesign of the integrated circuit 119, along the modular scribe lines 150 and 151, and the bar layout compressed so as to result in integrated circuit chip 149 bar layout and design as shown in Fig. 7. As shown in Fig. 7, one page of ROM and associated decode 147 and 148, of the read only memory means 146 is removed, and a plurality of registers and associated decode, 143 and 144, of the read write memory means 142 are removed in partitioned groups along the modular scribe lines 150 and 151 as shown in Fig. 6, so as to provide an integrated circuit chip 149, as shown in Fig. 7, identical to the integrated circuit chip 119 of Fig. 6, except for the reduced memory capacity and reduced bar size of the chip 149. Thus, a functionally identical circuit of reduced bar size and reduced memory capacity is provided without necessitating redesign or relayout of the integrated circuit. Thus, the read only memory means 146 may be partitioned to include a minimum number of blocks of read only memory cells required to store the desired instruction set codes with the associated address decode circuit including only a sufficient modular portion to address the minimum number of blocks of read only memory. Furthermore, the read-write memory means 142 may be partitioned to include a minimum number of blocks of memory cells required to store data and the associated address decode circuitry partitioned to include only a sufficient modular portion of address circuitry required to address the minimum number of blocks of read-write memory cells.

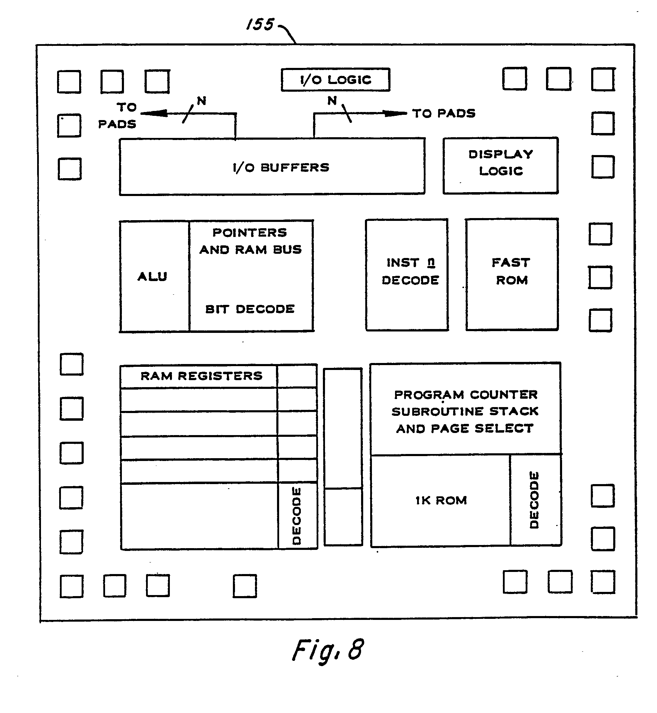

Referring to Fig. 8, a further reduction in bar size and memory capacity of the integrated circuit chip 149 of Fig. 7 is shown in the resultant integrated circuit chip 155. By removing selected modules of the partitioned memory circuit groups of the read only memory means 146 and the read write memory means 142, in the manner as described above with reference to Fig. 7, but with removal being made along the modular scribe lines 152 and 153 of the integrated circuit chip 149, the resultant integrated circuit chip 155 is created without circuitry redesign and essentially without chip relayout (possibly moving bonding pads if so desired) from the integrated circuit chip 149, of Fig. 7. It is also possible to derive the integrated circuit chip 155 of Fig. 8 directly from the integrated circuit chip 119 of Fig. 6. The modular features of the I/O means 122 and display logic means 124 are available and unchanged in the integrated circuit chips 119, 149 and 155, and will be described in greater detail, infra.

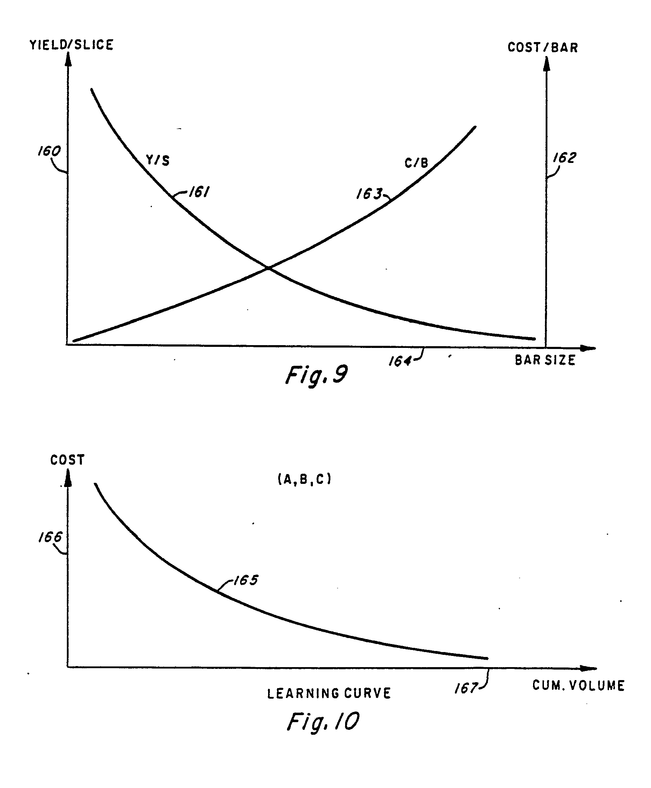

Referring to Fig. 9, two of the many benefits derived from the bar modularity as explained with reference to Figs. 6, 7 and 8 are shown. In Fig. 9, the advantages of optimizing the integrated circuit chip bar size to the application's memory requirements is shown in terms of benefits accruing in yield per slice along axis 160 as shown on curve 161, and as cost per bar along axis 162 as shown on curve 163, both yield per slice and cost per bar being plotted against a common axis 164 of bar size. As shown by curve 161, the yield per slice is inversely proportional to the bar size of the integrated circuits on the semiconductor wafer. As bar size per integrated circuit is decreased, more integrated circuit bars may be placed on a given semiconductor wafer slice, and even assuming a constant yield of bars, the yield per slice is increased. Additionally, as the bar size is reduced, and the complexity of the circuitry and fabrication associated therewith is reduced, the yield of the bars is increased. Referring to curve 163, the cost per integrated circuit chip (bar) is directly proportional to the bar size of the integrated circuit, and therefore optimizing bar size minimizes cost. The bar modularity feature of the present invention allows simpilfied, interchangeable and quick design turnaround of different memory capacity and specialized function integrated circuit chips with a common circuit group nucleus to be derived from a common circuit design and common bar layout, utilizing a common instruction set, and thereby removes most of the impediments heretofor present in attaining the benefits of optimum bar size for a given application. A further benefit of the bar modularity is reduced cost per bar from a separate phenomenon in the semiconductor industry known as the learning curve as applied to semiconductor manufacture.

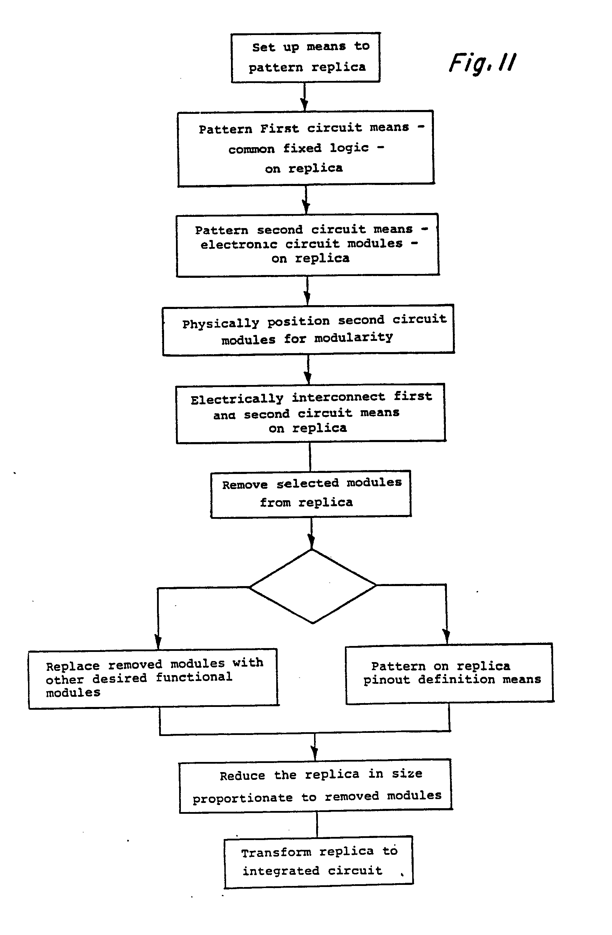

Referring to Fig. 10, a semiconductor learning curve 165 is shown as plotted against cost on the vertical axis 166 and cumulative volume on the horizontal axis 167, the horizontal axis being logarithmically scaled. The integrated circuit chips 119, 149 and 155 are derivable from the bar modularity invention, and all share a common bar layout, a common circuit design, and common processing. The manufacturing volume of each of the integrated circuit chpis within the bar modularity chip set are additive in forming a combined cumulative volume to drive the cost down the learning curve at a faster rate than attainable as to any of the integrated circuit chip bars standing alone.

A method of manufacturing a modular integrated circuit as described with reference to Figs. 6, 7 and 8 may be better understood with reference to the flow chart of Fig. 11. First, a first circuit means for providing permanent electronic circuitry is patterned on a replica of an integrated circuit to be manufactured. The first circuit means includes the program counter, subroutine stack, instruction decode array, arithmetic logic unit, memory pointers, accumulator, oscillators and clock generators, and a permanent section of read/write and read only memory. This first circuit means forms the central module for all versions of the modular integrated circuit. Next, a second circuit means is patterned on the replica of the integrated circuit in the form of at least two electronic circuit modules. The second circuit means includes control word storage in a read only memory, and data storage in a read/write memory, each forming separate portioned memories, but both being integral sections of the integrated circuit. Next, the electronic circuitry of the first circuit means and the modules of the second means are electrically interconnected on the replica of the integrated circuit so that any or all of the modules may be removed without destroying the functioning of electronic circuitry or of the remaining modules. In the preferred embodiment, the modules of the second circuit group are physically positioned on the replica with respect to other modules of the second group and the electronic circuitry of the first circuit means, so that any or all of the modules may be removed without necessitating relayout and such that the resulting layout produces a minimally size integrated circuit bar. Next, the non-desired modules are removed from the replica in accordance with the minimal memory requirements of the application and the special function requirements of the application to achieve an optimal amount of circuitry. Next, one of several options for alternative embodiments may be chosen. In one embodiment, the next step after the step of removing the desired modules is to replace the removed modules with other desired functional modules. In an alternative embodiment, the next step after the step of removing the desired modules is to pattern on the replica a pinout definition means, connected to the first circuit means, for changing the integrated circuit pinouts according to a pinout definition matrix so that the pinout of the integrated circuit may be redefined without destroying the functioning, patterning, or positioning of the first circuit means and the second means, followed by the step of patterning the pinout definition matrix according to the desired pinout. Alternatively, both of these steps may be taken. The next step, in any event, is the step of reducing the replica in size proportionally with the size of the removed modules so as to provide a minimal bar size and an optimal design. Next, the replica in its desired form is transformed into the desired integrated circuit. This may be done by a number of means, such as generating a mask set from the replica in its desired form, processing a semiconductor slice using said mask set, and packaging and testing the resultant integrated circuits.

The first circuit means includes block decode means for selectively providing an output to a selected one of the memory means electronic modules in the second circuit means in response to receiving a memory means address, wherein the selected memory means electronic module outputs a stored data word which is coupled to the first circuit means in response to receiving the output from the block decode means. Furthermore, the second circuit means may be partioned such that removal of individual ones of the blocks of the partitioned memory means electronic modules reduces the memory storage capacity of the integrated circuit in predefined modular blocks, such as one page or 1024 words of read only memory, and seven registers of read/write memory being a partitionable block of the memory means in a preferred embodiment.

The method of manufacture of the modular integrated circuit is accomplished, in a preferred embodiment, by an automated data processing machine having input thereto a representative circuit topology and initial values of all design variables wherein each of the steps as described with reference to the flowchart of Fig. 11 are generated and stored in the data processing machine. This includes the steps of generating and storing first circuit means for providing permanent electronic circuitry; generating and storing second circuit means in the form of at least two electronic modules; generating and storing electrical interconnect of the modules in the electronic circuitry to that any or all of the modules may be removed without destroying the functioning of the electronic circuitry and of the remaining modules; positioning the modules with respect to the electronic circuitry of the first circuit means so that any or all of the modules may be removed independent of the first circuit means and independent of the remaining modules; removing the desired modules from storage; reducing the stored circuit representation in size proportionally with the size of the removed modules; and transforming the stored representation in its desired form into an integrated circuit. Additionally, the one and other alternate embodiments as described with reference to Fig. 11 may also be utilized in conjunction with the automated data processing machine. Furthermore, modular functional blocks may be stored in the processing machine for recall and positioning in accordance with the desired application.

Utilizing the modular integrated circuit as described above, a modular system result as described with reference to Figs. 4A-D is achieved.

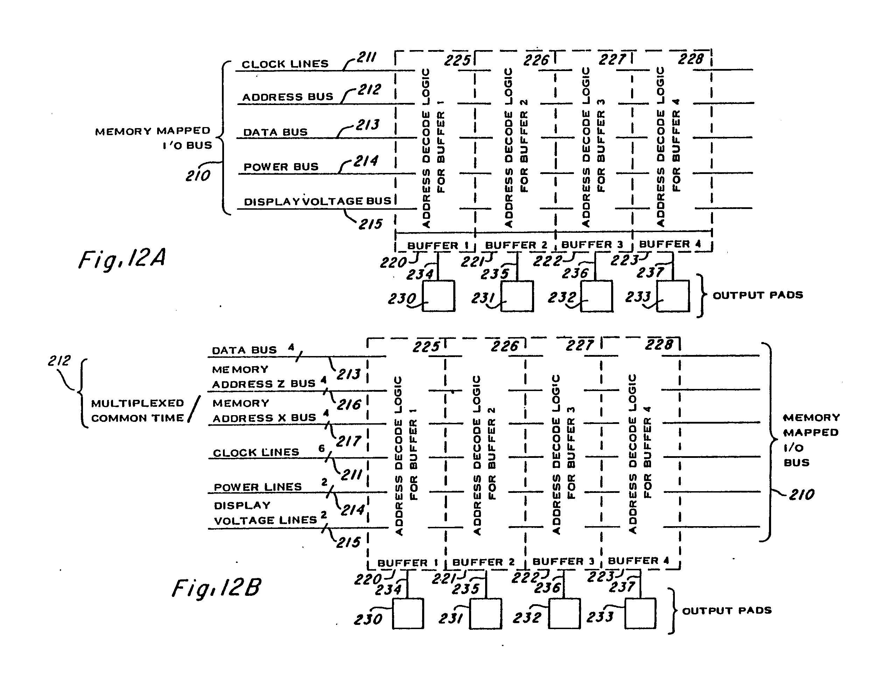

Referring to Figs. 12A-B, a block diagram of a modular I/O design for the controller integrated circuit 30 of Figs. 4A-D is shown.

A solution to the problem of rigid I/O design fixed to optimize each product is to provide a modular I/O design. First, each I/O buffer 220—223 is treated by the logic of the controller integrated circuit as an adderssable element of memory (memory bit). The I/O buffer can then be addressed and either written into or read from using memory compatible instructions and hardware. Next, each buffer is provided with its own associated memory address decode 225—228. This allows common address 212, data 213, control and clock lines 211 and power buses, 214 and 215, to be coupled in parallel to each of the I/O buffer locations, where each buffer has its own associated address decode which individually decodes its own predefined select address, and is selectively either written into or read from. This eliminates the need for special select and control lines for each of the buffers. In one embodiment of the invention, no change of the interconnect between the buffers and associated decode or between the buffers and bonding pads, or between the memory mapped I/O bus and the address decode is required to reconfigure the buffer functions and therefore the pinout. When a first buffer is the same as a second buffer, then simply reprogramming the decode address of the address decode associated with a particular buffer redefines the function of the buffer and the pinout associated therewith. Alternatively, the separate address decode associated with each of the first and second buffers may be swapped, that is be physically interchanged, so as to be associated with the second and first buffer, respectively, retaining the same program decode address.

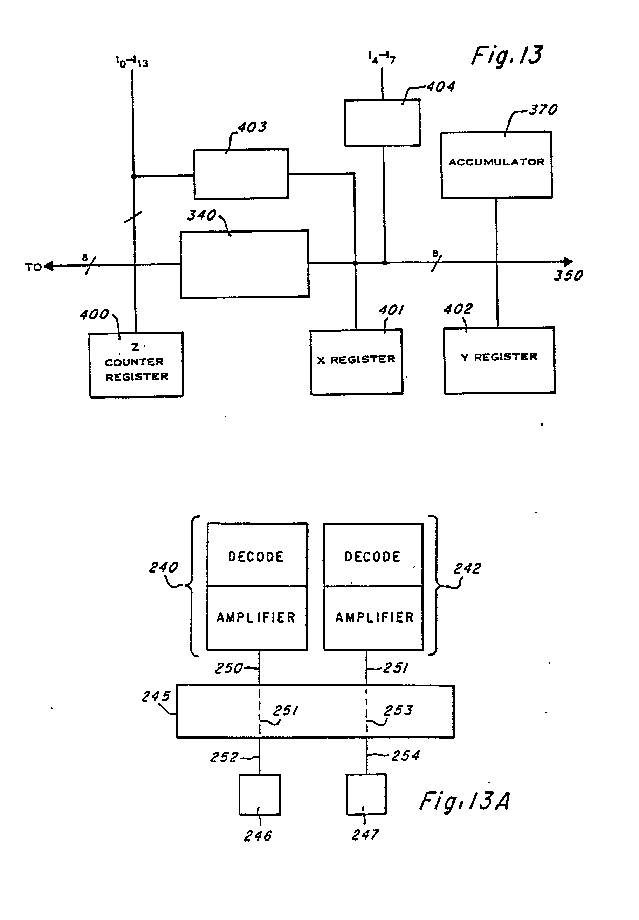

In a preferred embodiment, the I/O data bus is run along one edge of the semiconductor bar and all buffers and associated decode are placed along a straight line beneath and coupled to the I/O data bus as shown in Figs. 6-8. The metal interconnect is made from each of the buffers in the desired bonding pad, respectively. This provides the option of not having to physically remove a buffer and associated decode to a new bonding pad location in order to couple that buffer and associated address decode to that bonding pad. The address decode interconnect modularity permits the change of bonding pad functions between any two like species of buffers, for example between two select line buffers, and may be done by changing only the hardware programmable address at the buffer address decode. However, to exchange the coupling arrangement between two different species of buffers and associated bonding pads, for example, swapping a K line with a select line, would require physically removing and relocating the buffers, but in a preferred embodiment as described with reference to Figs. 13A-B, it only requires reprogramming an interconnect contact matrix so as to couple the metal interconnect from the desired buffer to the desired metal line coupling to the desired bonding pad. Although the I/O buffers may be designed so that each one may be programmed for a different function, in the preferred embodiment, each buffer has a specific function, so as to achieve optimal system circuit design. In the preferred embodiment there are discrete function buffers for I/O functions, input functions and K lines or select lines. In an alternate embodiment one general purpose buffer may be provided which fulfils all the functions that are required by the system. However this general purpose buffer would be physically larger than the largest function buffer used. This would allow the hardware programmable address feature of the buffers to accommodate complete changes of bonding pads functions irrespective of the particular species of function to be output without any hardware metal interconnect changes and in fact without any interconnect contact matrix in the preferred embodiment and without any buffer relocation in the one embodiment. However by optimizing buffer size for each function more buffers may be fitted in a given area of semicoductor bar. However if all the buffers are made general purpose and the same size then there is no limit as to total pin-out change simply by reprogramming the programmable address decode associated with the buffers. The choice of approach, the one embodiment, the preferred embodiment, or the alternate general purpose buffer embodiment is dependent upon the designer's objectives and the system requirements.

Referring to Figs. 12A-B, each I/O buffer 220—223 is treated by the logic of the integrated circuit in an addressable element of memory (memory bit). The I/O buffer is addressed and either written into or read from as a memory location. Next each buffer 220—223 has its own associated memory address decode 225—228. This allows common address data and control and clock lines busses 210 to be coupled in parallel to each of the I/O buffers 220—223 locations where each buffer's associated address decode circuit individually decodes its own predefined selected 361 address and is selectively either written into or read from responsive to the common and data codes. This eliminates the address, and is selectively either written into or read from responsive to the command and data codes. This eliminates the need for special select and control lines for each of the buffers. With the present invention, only an address bus 212 and data buffer 213 are required to be coupled to the buffers and associated decode logic, and a common address/common data bus may be utilized. To address 16 I/O buffers with the present invention, only four address lines are required for selection of one of the 16 buffers. A key additional advantage to the present invention is that it makes any I/O change easy to implement. That is, it does not matter where the buffer is located along the general purpose data bus. Thus, any individual buffer with its associated address decode can be physically located at any location along this address/data bus, and there is no necessity to relayout the select/control lines specific to each individual buffer when changing pin-out. Thus, the present invention makes any I/O reconfiguration a minimum design change which can be easily accomplished either manually or with the assistance of digital layout programming techniques. The buffers with associated address decode along a common address/data bus provides for a memory mapped I/O system with self address decode capability associated with each buffer. Thus, in one embodiment, no change of the interconnect between the buffers and associated decode or between the buffers and the bonding pads, nor between the associated decode and the memory mapped I/O bus is required to reconfigure the buffer functions and therefore the pin-out. To reduce bar layout complexity and bar size area, the address and data lines may be multiplexed together on a common bus coupled to the buffers and the address decode associated therewith. This results in fewer required lines in the I/O bus 210. When a first buffer is the same as a second buffer, then simply reprogramming the decode address of the address decode associated with a particular buffer redefines the output of the buffer and the pin-out associated therewith. Alternatively, the address decodes associated with each of the first and second buffers may be swapped, that is be physically interchanged, so as to be associated with the second and first buffer, respectively, with the address decodes retaining the original program decode address. Alternatively, if it is desired to retain the same address decode location with a different type of buffer, the buffer is replaced or swapped with a buffer of the desired type, and coupled to the original address decode and to the bonding pad to which the replaced buffer was associated with. By this method, optimal buffer size is achieved, while retaining I/O modularity and pin-out definition modularity. In a preferred embodiment, as described with reference to Figs. 13A-B, a programmable interconnect contact matrix 245 is interposed between the outputs of the buffers 220—223 and the metal lines 234—237 coupling to the bonding pads 230—233. Thus, by providing a particular matrix program for the interconnect matrix·245, the coupling of the output from the buffers to the bonding pad locations which couple to the external coupling means to form the external pin-out may be modified independently of the buffer locations or the selected address decode for any given buffer.

Referring again to Figs. 12A-B, in one embodiment of the invention, the I/O bus 210 is distributed around the whole perimeter of the integrated circuit bar, and each individual buffer 220—223 and associated address decode 225—228, is located adjacent to and coupled to a respective bonding pad 230—233. The address to which each buffer 220—233 will respond is controlled by programming a selected address into the associated address decode 225—228 by hardwire programming, such as via gate, moat, or metal level masks during processing, via ion implants, or via electrically programming after completion of processing. In order to change the association a particular buffer and associated decode with a particular bonding pad to be associated with a different bonding pad, the particular buffer and associated address decode must be physically relocated adjacent to the different bonding pad to which it will couple, and the address decode logic must be selectively programmed to respond to the newly selected desired address.

In a preferred embodiment of the present invention, the I/O data bus 210 is run along one edge of the semiconductor bar as shown in Figs. 6-8, and all buffers 220—223 and associated decode 225—228 are placed along a straight line beneath and coupled to the I/O data bus 210.

Referring to Figs. 13A-B, the metal interconnect 234—237 from the buffers 220—223 to the desired bonding pad 230—233, respectively, of Fig. 12A-B, are functionally replaced by an equal number of programmable interconnects, such as 251 and 253, of a programmable interconnect contact matrix means 245 as shown in Fig. 13A. This provides the option of not having to physically remove a buffer and associated address decode and physically replace the buffer and associated decode to a new bonding pad location in order to couple that buffer and associated address decode to the new bonding pad. Rather, by varying the selected pattern of the interconnect contact matrix 245, for example, by means of hardwire programming (such as gate or metal level mask programming during processing, ion implant, by post assembly electrically programming, or by other programming means), the selective coupling between the outputs of the buffers 220—223 and the bonding pads 230—233 of Figs. 12A-B is accomplished without physical relocation or relayout of the semiconductor bar, and without reprogramming the associated address decode circuits 225—228. A group of metal lines 234—237, each output from a respective buffer 220—223, are coupled to a respective location in the matrix 245, and an equal number of metal lines are output from the matrix 245 each coupling to a bonding pad 230—233. The chip designer may select an individual buffer and program the metal connection via the interconnect contact matrix 245 out to a particular metal line coupling to a particular bonding pad. For example, referring to Fig. 13A, assume it is desired to change the functions served by a bonding pad 246, which was an input buffer 240 function (KC), to an output buffer 242 function (R4) select which was coupled to bonding pad 247, pads 246 and 247 being adjacent one another. Two metal lines, 252 and 255, physically located adjacent one another, are run along the one edge of the bar adjacent to the I/O buffer arrays 240 and 242. The metal connects, or coupling means, 251 and 254, from the outputs of the KC buffer 240 and the R4 select buffer 242 must be changed to couple with the desired bonding pad metal lines to achieve the functional swap. The address decode I/O modularity permits the change of bonding pad functions between any two like species of buffers, for example between two select line buffers, and may be done by changing only the hardware programmable address at the buffer address decode. However, to exchange the coupling arrangement between two different species of buffers and associated bonding pads, swapping the KC line with the R4 select line, would require physically removing and relocating the buffers with the address decode I/O modularity scheme, but in the preferred embodiment, would only require reprogramming the contact matrix 245 so as to couple the metal interconnect from the desired buffer to the desired metal line coupling to the desired bonding pad. Although the I/O buffers may be designed so that each one may be programmed for a different function, in the preferred embodiment each buffer has a specific function so as to achieve optimal system circuit design. In the preferred embodiment, there are discrete function buffers for I/O functions, input functions, and K lines or select lines. In an alternate embodiment, one general purpose buffer is chosen which would fill all the functions that are required by the system, although the buffer would have to be physically larger than the largest function buffer used. This allows the hardware programmable address decode feature of the buffers to accommodate complete changes of bonding pad functions irrespective of the particular species of function to be output, without any hardware metal interconnect changes (thus obviating the need for the interconnect contact contact matrix 245 in this embodiment), and without any buffer relocation required as in the special purpose buffers embodiment. However, by optimizing buffer size for each function, more buffers are fitted in a given area of semiconductor bar. For example, a select buffer is much wider (approximately 5 to 10 times wider) than a K buffer. If all of the buffers were general purpose multi-function buffers, then each buffer for the K-function would be 5—10 times larger than that required for the specific application, and consequently, the design would be limited as to how many output buffers could be placed within the allowable bar size area of the semiconductor. However, if all the buffers are made general purpose and the same size, then there is no limit as to total pin-out change simply by reprogramming the programmable address decode associated with the buffers. The choice of approach is dependent upon the designers objectives and the systems requirements, and the advantages and disadvantages of each approach must be analyzed for each project.

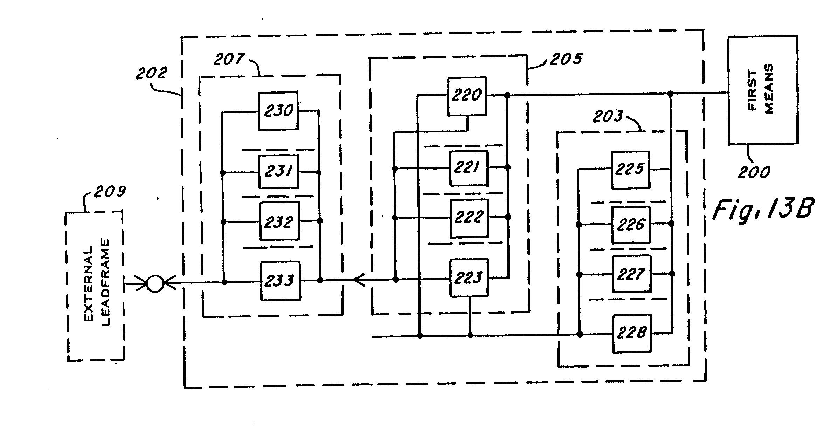

Referring to Fig. 13B, the programmable interconnect matrix is comprised of a pin-out definition means 202, comprised of interconnect coupling means including bonding pad means 207 including individual bonding pads 230—233, for providing interconnection to conductors 209 external to the integrated circuit so as to define a pin-out for the integrated circuit, including interconnect contact means including amplifier means 205 and logic means 203 for coupling the first circuit means 200 to the bonding pad means 207 including means for providing programmable interconnect (such as mask level during processing or electrical programming after manufacture) from outputs from the first circuit means 200 to individual bonding pads 230—233 of the first circuit means 207 according to the programmed state of pin-out definition matrix means within the interconnect contact means 202.

Referring to Fig. 14, a block diagram of a preferred embodiment of the memory mapped I/O in a modular controller integrated circuit of the present invention is shown. A plurality of R/select line outputs, 300, are used either to drive a one/fourth duty cycle liquid crystal display, for keyboard scan, or for communication. A plurality of K line inputs, 310, are utilized for keyboard scan, or for communications input of a source external to the integrated circuit. In the preferred embodiment, four of the bit lines are used as multiplexed test outputs as described in copending application TI-  . A plurality of common lines 320 function as inputs or outputs. In the preferred embodiment, four common/test input lines are used either to drive an externally coupled liquid crystal display, or may be used to receive input addresses for coupling to the main program counter or instruction decoder of the controller chip. A plurality of dedicated test inputs 315 may be provided, the preferred embodiment utilizing four dedicated test inputs.

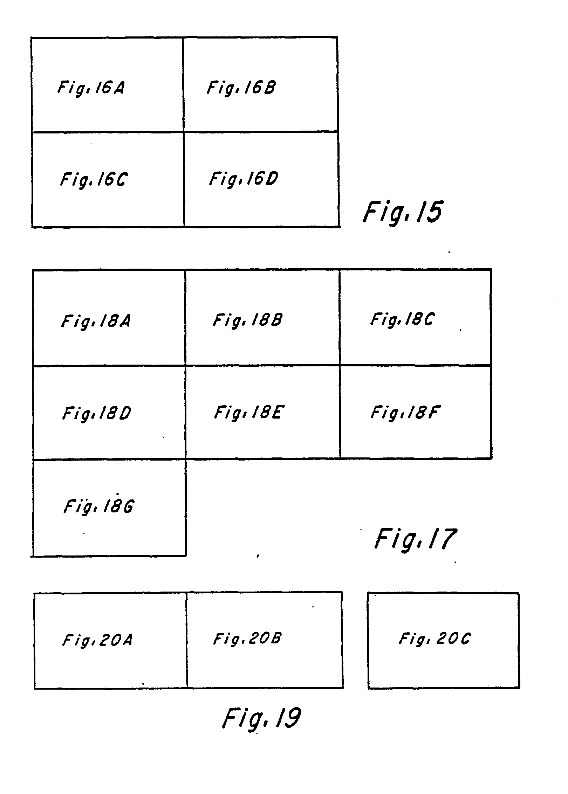

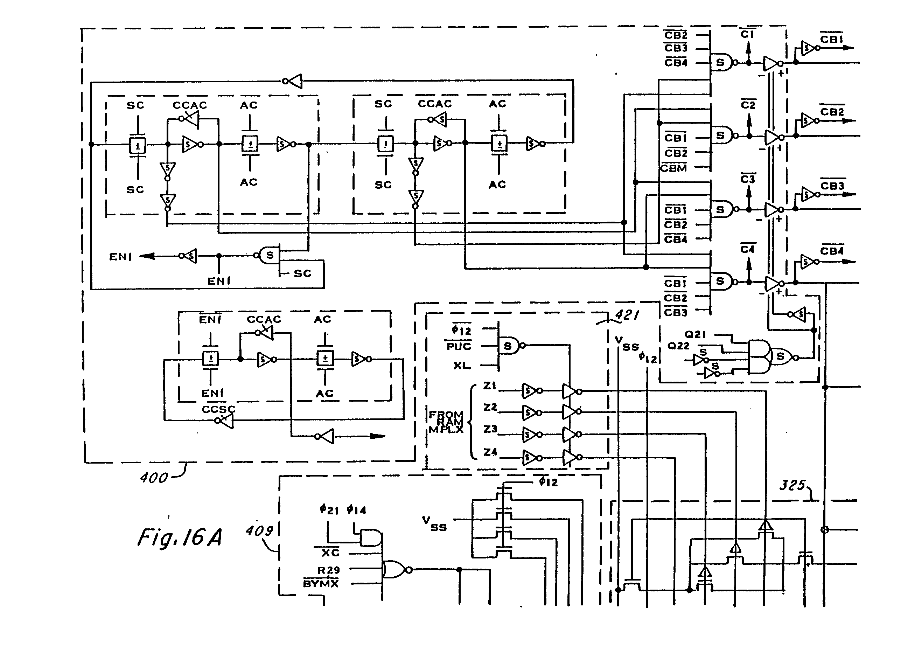

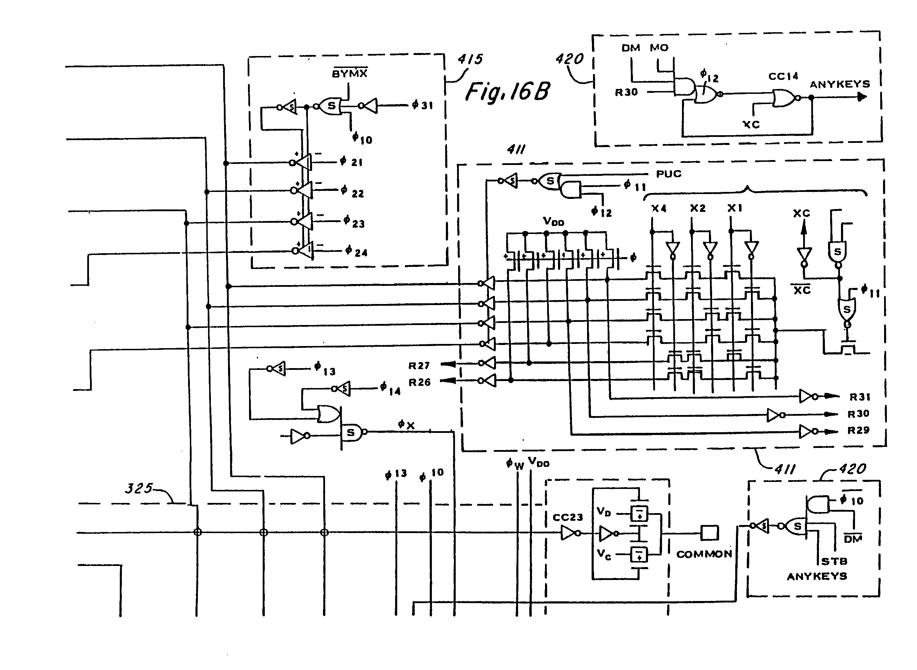

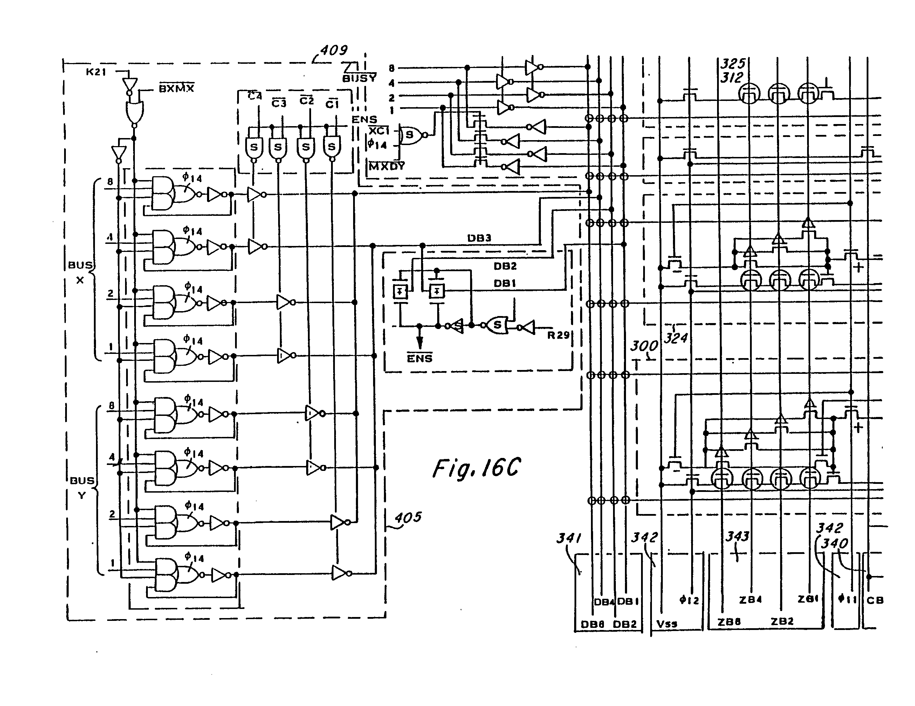

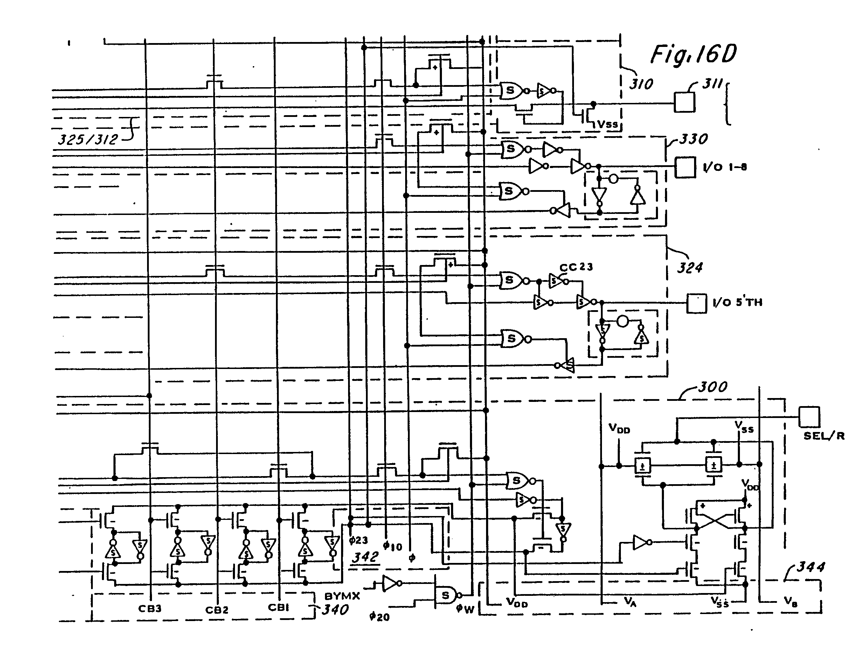

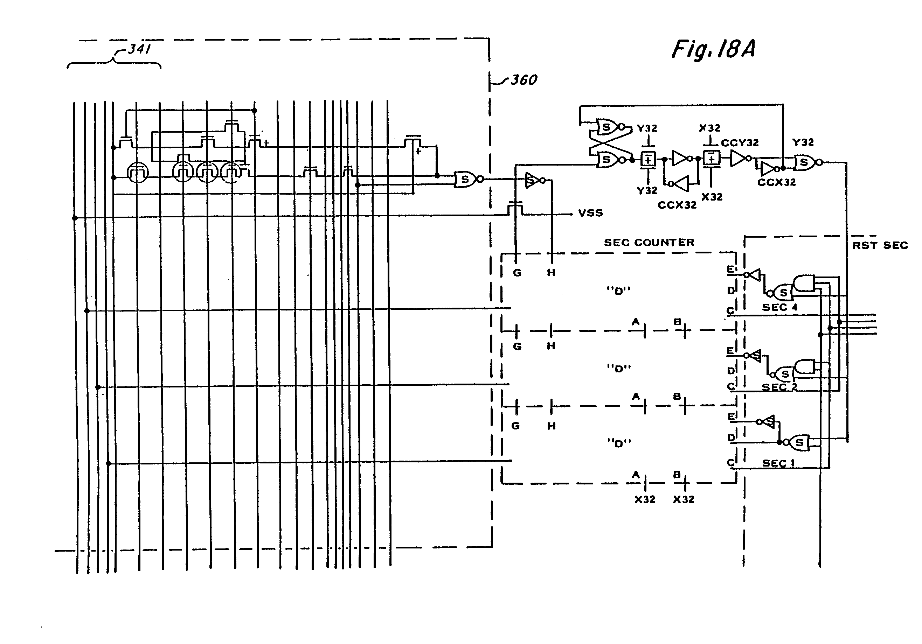

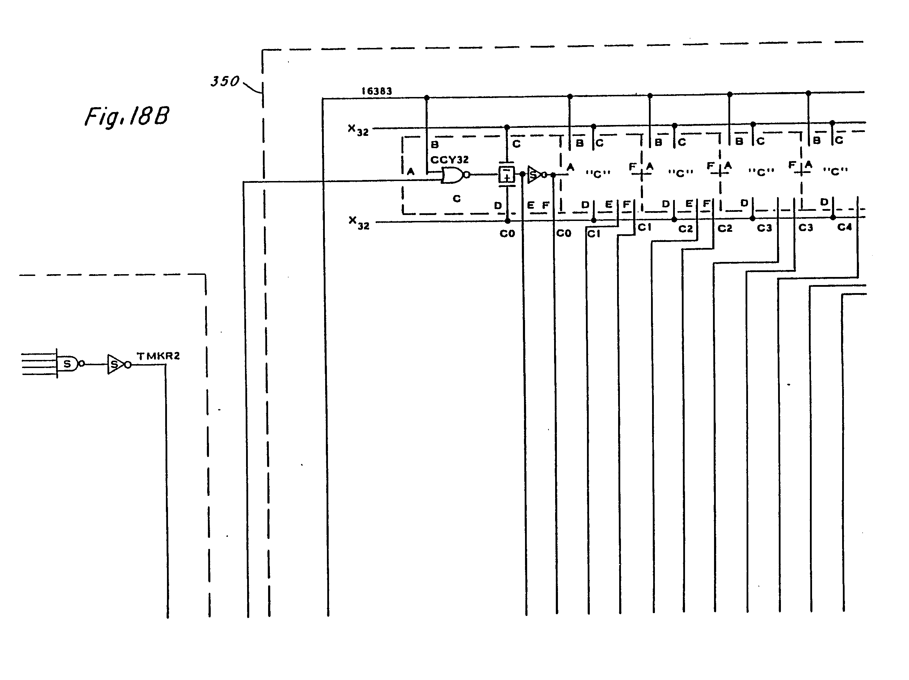

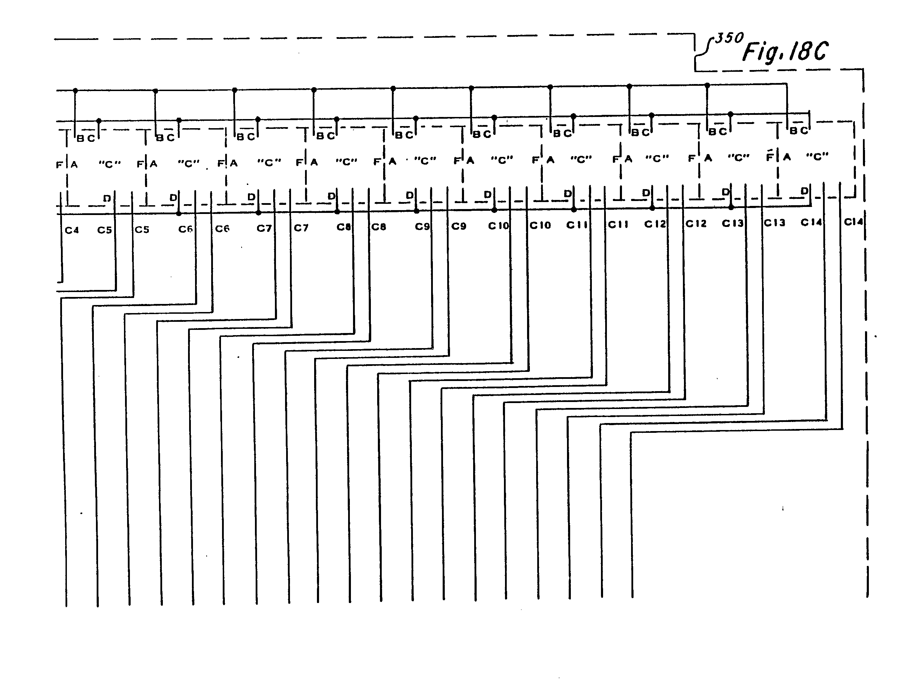

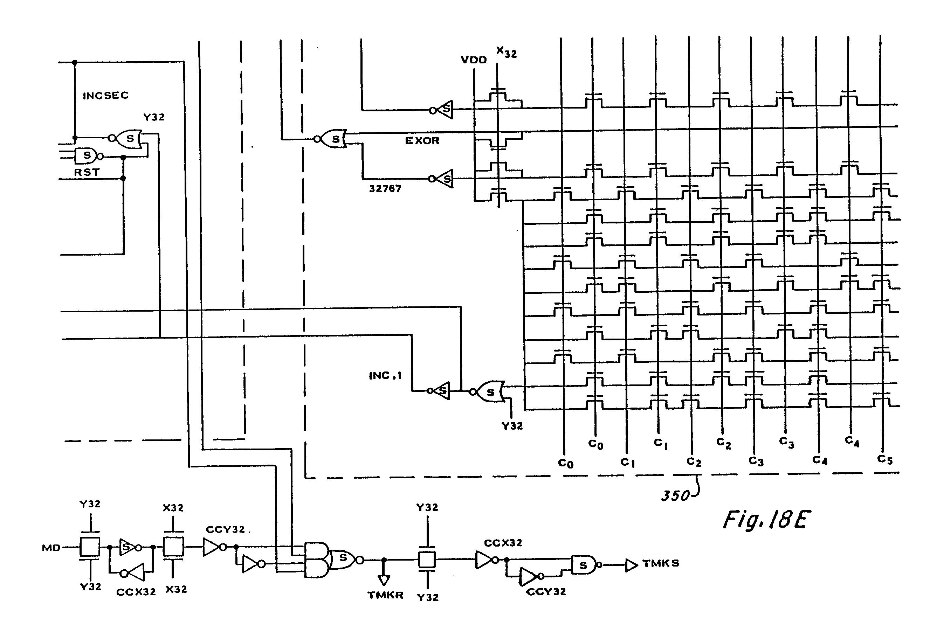

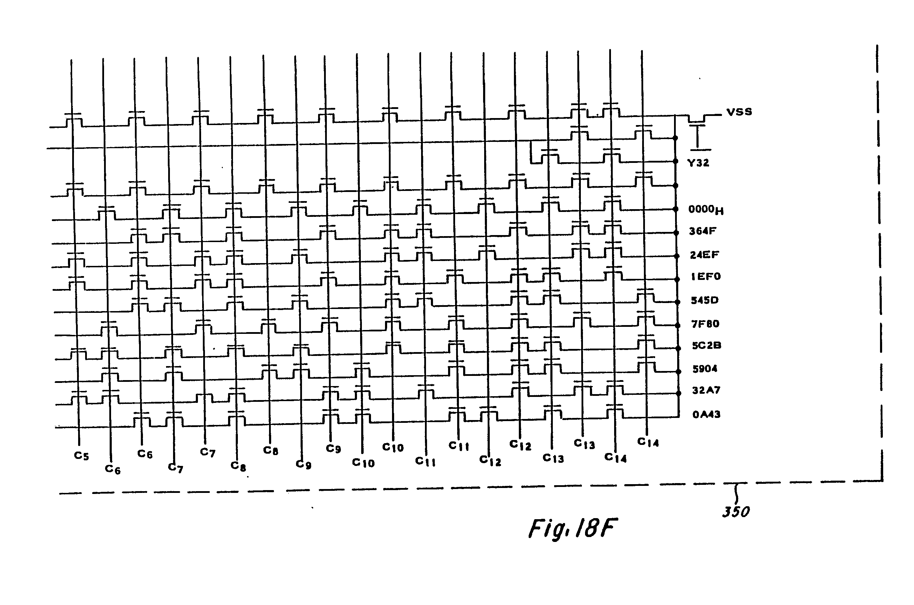

At least one print I/O communications line 324 is provided for in the preferred embodiment. A plurality of bidirectional input/output lines 330, I/O 1, 2, 4, 8 in the preferred embodiment, provide for bidirectional communication to a source external to the integrated circuit such as separate RAM, ROM or peripheral integrated circuits as shown in Figs. 5A-C. In the preferred embodiment, the address decode logic, as shown in Figs. 12A-C, are designed so as to be responsive to RAM register locations greater than 23. Of course depending on the number of RAM registers used in the controller, and upon the bus architecture utilized in the controller, other addressing schemes of the address decode logic is possible. In the preferred embodiment, the associated address decode forms a part of the select/R lines 300, the common lines 320, the K lines 310, the print I/O lines 324, the I/O lines 330, and timekeeping means 350. Each associated address decode is coupled to an internal I/O bus 335 corresponding to the control bus 210 of Figs. 12A-B. The I/O bus 335 is comprised of a Memory Address X/Multiplexed Common Line bus 340, corresponding to bus 217 of Figs. 12A-12B; a Data bus 341 corresponding to the Data bus 213 of Figs. 12A-12B; a Timing and Control bus 342 corresponding to the bus 211 of Figs. 12A-B; a Memory Address Z bus 343 corresponding to the bus 216 of Figs. 12A-B; and a display and power voltage bus 344, corresponding to busses 214 and 215 of Figs. 12A-B. Additionally, in the preferred embodiment, fixed logic blocks and modular logic block coupling to the I/O bus include the timekeeping logic 350 and associated decode 360, as shown in greater detail in Fig. 17 and Figs. 18A-G. The I/O bus 335 is coupled to a plurality of modular circuit blocks and fixed logic circuit blocks comprising interface means for bidirectional communication between the processor portion of the controller integrated circuit and the I/O bus 335.

An I/O oscillator 370 provides an output coupled to an I/O clock generator 372 which responsive thereto provides a first output to a display voltage generator 374 and provides a second output to the clocking and control logic 376. The clocking and control logic 376 provides a plurality of timing and control outputs, coupled to the timing and control bus 342, responsive to receiving the second output from the I/O clock oscillator 372 and to receiving a processor clock input 377. The I/O oscillator 370 is, in the preferred embodiment, an RC controlled oscillator output operating at a nominal 32 KHz. The oscillator 370 is coupled to and drives the I/O clock oscillator 372 independent of and asynchronous, to a main processor oscillator within the processor portion of the controller integrated circuit. Independence from the main oscillator yields considerable power savings in a display only mode wherein only the I/O oscillator and display circuitry is active.

The I/O clock generator 372 divides the received output from the I/O oscillator 370 to generate multi-phase I/O clocks at different frequencies. In the preferred embodiment, the I/O clock generator 372 provides two phase I/O clock signals at 8 KHz and at 500 Hz, providing pulses suitable for shifting the common time generator 373 of the common time generator and multiplexer logic 400, every two milliseconds. The I/O clock generator 372 also provides an output which, in the preferred embodiment, generates a 125 ms pulse every third common time which may be used to provide for rapid hardware keyboard interupts via the select/R lines 300. This output may be coupled to the display voltage generator 374 so as to allow the hardware keyboard interupts to affect all display segments of the external display identically.

The common time generator and multiplexor logic 400 is shown in greater detail in Fig. 16a. The common time generator 373 and multiplexor 375 form a two bit shift counter in the preferred embodiment, having four states which correspond to the four common times of the system. The counter shifting rate is selected via the multiplexor 375 responsive to the outputs from the machine state control mode latches 371, so as to shift at a display rate of two milliseconds, or at the processors internal instruction cycle rate, 15 microseconds in the preferred embodiment. The common time generator 373 provides a plurality of outputs coupled to the select data latches 405 and a buffer 407. The outputs from the buffer 407 are coupled to the memory address X bus/common bus 340. The X Decode Programmable

Logic Array (PLA), 410, in the preferred embodiment, encodes a five bit RAM X register address received from the processor portion of the controller integrated circuit into a memory address x bus 340 compatible output so as to select a particular addressed buffer along the I/O bus 335. In the preferred embodiment, the PLA 410 provides active decode only for X addersses greater than 11000, (base 2). The output of the PLA 410 is coupled to an isolation buffer 411 which provides an output coupled to the memory address X bus 340.

Select data latches 405 are comprised of a plurality of single bit latches which store character data to be clocked into the select buffers 300. This data is received from the processor portion of the controller integrated circuit via the processor's internal data busses x and y when the latches are selected by the common time generator 373. The select data latches 405 replace the conventional Output Programmable Logic Array. Character data may be stored in a look up table coded into a series of instructions in the instruction's immediate fields within the main read only memory of the integrated circuit. Only the data required for a particular individual display requirement is stored, and may be changed with a change in ROM code. The data outputs from the select data latches 405 are selectively strobed from the latches 405 responsive to the output received from the common time generator 373, in proper sequence to the select/R buffers 300 and stored in the four bit latch 301 of the select/R buffers 300, coupling via the data bus 341. Additionally, the data bus 341 is coupled to a bidirectional buffer interface 409 to one of the internal data busses from the processor portion of the controller integrated circuit. An anykeys latch 420 is coupled to the outputs from the X decode PLA 410 and to an output from a buffer 421 which couples a signal from the processor's multiplexed PZ address bus. The anykeys latch, 420, may be a hardware or software controlled latch which causes all select/R line 300 outputs to be coupled to a first supply voltage, VDD in the preferred embodiment, when the anykeys latch 420 is set. The anykeys latch 420 may also enable the K-line 310 pull down transistors to activate. In the preferred embodiment, the anykeys latch is only set during a process and display mode. In general, the anykeys latch 420 is set and reset in response to predefined set and reset instruction execution. An output from the anykeys latch 420 is coupled to the display voltage generator 374.

The display voltage generator 374 is coupled so as to receive inputs from the machine state mode control latches 371, the common time generator 373, the anykeys latch 420, and the I/O clock generator 372. The display voltage generator 374 provides outputs coupled to the display voltage bus 344. In essence, the display voltage generator 374 serves two purposes:

1) to generate the multiple voltage reference outputs (VDD, 2/3VDD, 1/3VDD, and VSS, in the preferred embodiment) as required for one/fourth duty cycle operations; and

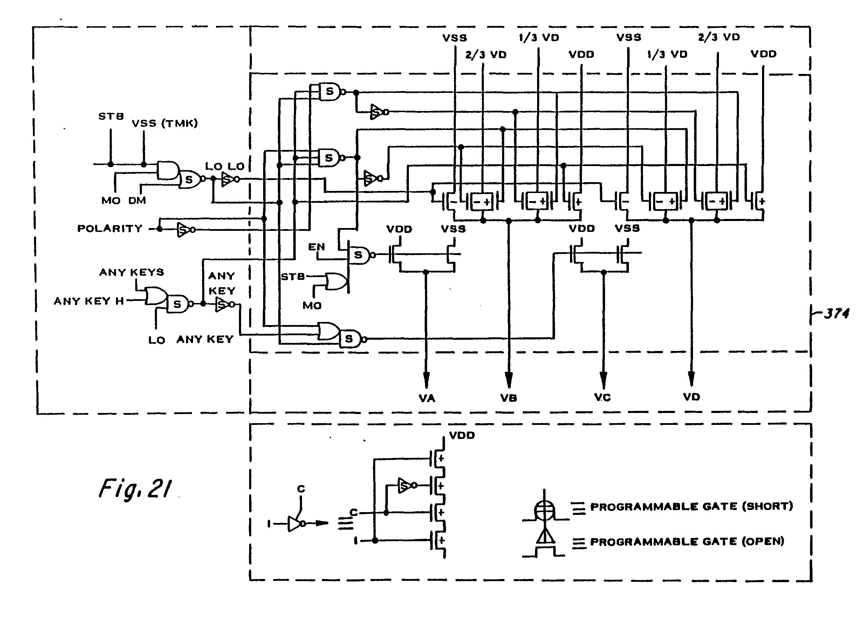

2) to switch the liquid crystal display drive voltage busses 344 between the voltage references and to supply a nominal 62.5 HERTZ AC waveform with a zero volt DC offset voltage for coupling to the liquid crystal display. Intermediate voltages may be generated via passive resistor divider chains, as shown in greater detail in Fig. 21. A low impedance divider chain may be used for the first five percent of each common time when the display voltages are changing, after which time a high impedance chain may be used to hold steady the voltage level, in the preferred embodiment.

The clocking and control logic 376 is coupled so as to receive inputs from the I/O clock generator 372 and from the processor clock bus 377, from the processor portion of the controller integrated circuit.

The clocking and control logic 376 generates various timing and control signals so as to enable to the processor portion of the controller integrated circuit to synchronously interface with the I/O portion for communication. The clocking and control logic 376 may also selectively activate desired sections of the I/O portion of the integrated circuit so as to force those sections to become static combinational logic when the processor is inactive, responsive to the outputs from the control latches 371, thereby allowing the I/O to display information when driven only by the common time generator 373.

In a preferred embodiment, the I/O bus 335 is comprised of four Data Lines comprising the data bus 341; four Memory Address X/Common Lines comprising the X/common bus 340; four PZ lines comprising the PZ bus 343; six clock/control lines comprising the Timing and Control bus 343; four Display Voltage lines comprising the Display Voltage bus 344; and two power lines forming a main power bus. Each buffer, set of buffers, or special circuit coupled to the I/O bus 335 includes individual address decode circuitry so that each individual buffer or special circuit decodes its own address directly off the I/O bus 335, which may use a noncomplementary signal decoder as described herein or through any other type of address decode means. This feature of individual address decode being associated with each buffer or special circuit facilitates changing buffer address or buffer location by simply changing the hardware address decode circuitry. In the preferred embodiment, the hardware address decode is programmable, either during processing via ion implant, via metal mask, gate mask, moat mask, or a combination thereof, or after processing via electrical programming.

The data bus 341 as shown in greater detail in Fig. 16c, is a bidirectional multibit bus. In the preferred embodiment the data bus 381 is a four bit bus. Data transfer to and from the buffers coupled to the bus 335 and to the processor's internal bus' occurs via the data bus 341.

The PZ address bus 343, as shown in greater detail in Fig. 16c, couples a memory address received from the processor to an individual buffer coupled to bus 335, where it is decoded. In the preferred embodiment, the PZ address bus 343 is coupled to the processor's four bit RAM word address as output from the multiplexed PZ address buffer 421, as shown in detail in Fig. 16a.

The Memory Address X/Common line bus 340 as shown in greater detail in Fig. 16c, is a unidirectional bus which serves multiple purposes. In the preferred embodiment, the memory address x/common bus 340 is a four bit unidirectional bus which serves four purposes. First, when the processor is communicating with the I/O section, encoded register data as output from the X decode PLA 410, as shown in greater detail in Fig. 16d, is coupled to the memory address X/common bus 340 for coupling to the selected individual buffers for decoding during the first half of the processor's instruction cycle. Second, when the processor is communicating with a Select/R buffer 300, so as to load R line data, timing signals are carried to the Select/R buffers 300 so as to strobe data into the buffers' 4-bit latch 301 during the second half of the processor's cycle. Third, while the calculator system is displaying information, the common time generator 373 utilizes the Memory Address X/Common bus 340 to couple strobe outputs to the common buffers 320 to couple data to the display while simultaneously strobing the proper data from the four bit select latches 301 to the select/R buffers 300 and therefrom to the external system. Fourth, and finally, when the processor is loading select data from an internal bus of the processor via the select data latches 405 or via the bus transceiver 409, the common time generator 373 utilizes the Memory Address X/Common bus 340 to strobe data from the data bus 341 into the proper bit of the four bit latch 301 via one output of the select/R buffers 300.

The timing and control bus 342, as shown in greater detail in Fig. 16d, is comprised of various clock and control signals needed to execute addressing, data transfer, and read/write operation of the buffers coupled to the I/O bus 335. The display voltage bus 344, as shown in greater detail in Figs. 16b and 16d, in the preferred embodiment, couples four time varying waveforms as output from the display voltage generator 374 to the common buffers 320 and to the Select/R buffers 300 so as to properly multiplex a one-fourth duty cycle liquid crystal display.

The common buffers 320 are coupled to bus 335. The common buffers 320 couple switched time varying waveforms to the back-plane of a liquid crystal display at a frequency determined by the common time generator 373.

The select/R buffers 300, as shown in greater detail in Figs. 16c and d, are coupled to the L/O bus 335. The select/R buffers 300 couple switched time varying waveforms to a front-plane of a liquid crystal display, synchronous with the common time rate, so as to effectuate a visible display of desired data on the liquid crystal display. Individual segments of the liquid crystal display are turned on or off, depending upon the data stored in the four bit latch 301 of the select/R buffers 300. The outputs from the select/R buffers 300 may also be utilized for logic level output lines subject to the software and electrical restrictions imposed by the system design.

The K lines buffer 310, as shown in greater detail in Figs. 16a and 16d, are coupled to the Memory Address X/Common bus 340, the data bus 341, the timing and control bus 342, and the PZ bus 343, in the preferred embodiment. The K lines buffer 310 couple to externally supplied inputs and provide logic level inputs for coupling to the I/O bus 335. In the preferred embodiment, the K line buffers 310 include active pull down devices. In the preferred embodiment, the K lines 310 are utilized to sample the keyboard at periodic intervals. Additionally, the pads 311 to which the K line buffers 310 are coupled also serve as output couplings for four bit test data output when the calculator system is in the test mode.

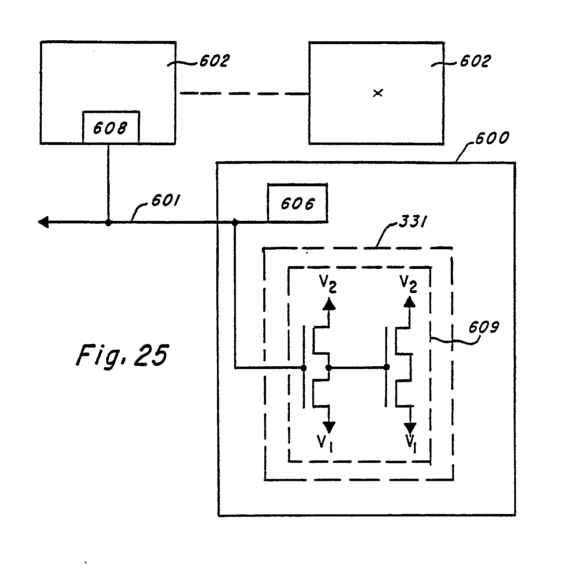

The print I/O buffer 325 is coupled to the I/O bus 335, as shown in greater detail in Figs. 16c and d. The print I/O buffer 325 is designed so as to provide for communication with an external printer-controller integrated circuit. In a preferred embodiment, the print I/O buffer 325 is used with a pulse-width modulation serial data transmission technique. Included in the print I/O buffer 324 are the address decode, an amplifier, and a latch 331 attached thereto which stores the last fixed logic level transmitted on the serial I/O line in accordance with a desired communication protocol, as described in greater detail with reference to Fig. 25.

The external I/O buffers 330, as shown in greater detail in Figs. 16C-D, provide for bidirectional communication with circuits external to the controller integrated circuit. Included with the I/O buffers 330 are the associated address decode, buffer amplifiers, and I/O pulldown latches 331 as described in greater detail with reference to Fig. 25.

The anykeys latch 420, as shown in greater detail in Fig. 16b, is a software controlled latch which pulls all select/R pads to VDD, the positive supply voltage of the preferred embodiment, when the latch 420 is set. Additionally, the anykeys latch 420 may enable the K-line pull down devices. The anykeys latch 420 is set by any of a plurality of instructions executed after a first predefined X register address is decoded when the controller integrated circuit is in a particular power mode as determined by the output from the mode latches 371. In the preferred embodiment, the anykeys latch 420 is set by any instruction executed after addressing the X register 30 when the calculator system is in a process and display mode. The anykeys latch is reset in response to receiving an X register address less than a second predefined value. In the preferred embodiment, the second predefined value is 24.

In the preferred embodiment, the I/O section as shown in Fig. 14 appears as an extension of RAM memory to the processor and to the instructions as determined by the software. The I/O section is addressed by the same memory pointers that address the processor read/write memory RAM. In a preferred embodiment, a multiple memory pointer system may be utilized. The data transfer polarity may be determined by the same read and write microcodes which control the processor RAM. Table 4-1 summarizes the buffer addressing, in the preferred embodiment, for the buffers as shown in Fig. 14. As seen from table 4-1, the anykeys latch 420 is reset when the main oscillator latch (MO) of the mode control latches 371 provides an active level output and when the X register address received on the X/common bus 340, contains an address less than 24. The anykeys latch 420 is set when the display mode (DM) and the MO latches of the mode control latches 371 both provide active outputs, and the address output on the X/common bus 340 is 30. The select data latches 405 may be written into when the received address from the X/common bus 340 is 27, when a microcode bit BXMX is at an active logic level (1), and then the MO latch of the control mode latches 371 provides an active output. The print/I/O buffer 325 is written into when the X/common bus 340 contains the address 28, when a microcode bit BXMY is at an inactive (o) or low logic level, when a microcode bit BYMX is at an active or high logic level, and when the output of the MO latch of the control mode latches 371 is at an active output level. The print buffer may be read from when the Xcommon bus 340 contains the address 28, when the microcode bit MXBY is at an active logic level, when the microcode bit BYMX is at an inactive logic level, and when the output from the MO latch of the mode control latches 371 is at an active level. The outputs from the select data latches 405 are written into the select/R buffers 300 when the X/common bus 340 contains the X register address 29, when the PZ bus 343 contains the word address 0000-1011 (binary), when the microcode bit MXBY is at an inactive level, when the microcode bit BYMX is at an active output level and the output from the MO latch of the mode control latches 371 is at an active logic level. The four most significant bits, KA-KD, of the K line buffers 310, may be read when the X/common bus 340 contains the X register address 30 when the PZ bus 343 contains the word address 0011 to 1011 (base 2), when the microcode data bit MXBY is at an active logic level, when the microcode bit BYMX is at an inactive logic level, and when the output of the MO latch of the mode control latches 371 is at an active logic level. Additionally, when the X/common bus 340 contains the address 30, and when the PZ bus 343 contains the word address 0100 or 1100, when the microcode data bit MXBY is at an active logic level, when the microcode data bit BYMX is at an inactive logic level, and when the MO latch of the mode control latch 371 is an active output level, then the least significant bit, KE, input from the K line buffers 310 is read to the data bus 341. Finally, when the X/common bus 340 contains the register address 31 (base 10), the PZ bus 343 contains the word address 0000-0101 or 1000-1011 (base 2), when the microcode data bit MXBY is inactive, when microcode bit BYMX is active, and when the mode control latch 371 provides an active MO output and an inactive DM output, then the select/R buffers 300 may be written into with the R data.

Table 4-2 shows the select/R addressing for the preferred embodiment, showing the relationship between the X/common bus 340 address, the select addresses, and the R-line addresses. Table 4-3 shows the select/R multiplexing for the preferred embodiment. Referring to table 4-3, when the PZ bus 343 contains a 0 address, either select addresses S0A and S0B or outputs R0—R3 are selected depending on whether the select buffers or the R buffers are being addressed. The R-line addresses are repeated starting at PZ bus 343 output=8, because the most significant bit of the PZ bus 343 is disabled, in the preferred embodiment, during decode of the control information, so as to allow selection of four R lines at any given time. The R-line addresses, as shown in table 4-2, are written underneath the bit of the data bus 341 to which the particular R line is coupled to. The table 4-3 shows the exact correspondence of select and R-line addresses for the preferred embodiment. For example, select line 1B is equivalent to R line 5 insofar as decode is concerned.

Referring to Fig. 15, the layout interrelationship of the Figs. 16a-16d is shown. Referring to Fig. 16a-d, common time generator logic 400 is shown including the common time generator 373 the multiplexor 375, and the buffer 407. Additionally, the PZ bus buffer 421 is shown (Fig. 16a). The processor internal bus to I/O data bus 341 interface transciever 409 is shown in Figs. 16a and c. The address decode means 325 and associated common buffer 320 is shown in Figs. 16a-b. The processor clock to common bus interface 415 is shown in Fig. 16b. The anykeys latch 420 is shown in Fig. 16b. The X-decode PLA 410 is shown in Fig. 16b also. The select data latches 405 is shown in Fig. 16c. The data bus 341, timing and control bus 342, the PZ bus 343, and Memory Address X/Common bus 340, are shown in Figs. 16c and d, while the display voltage bus is shown in Fig. 16d. The K line buffers and associated decode 310 and 312, the I/O Buffers 330 and associated decode, the print I/O buffer 324 and associated decode, the select/R buffer and associated decode 300, and four bit latch 301, are shown in Figs. 16c and d.

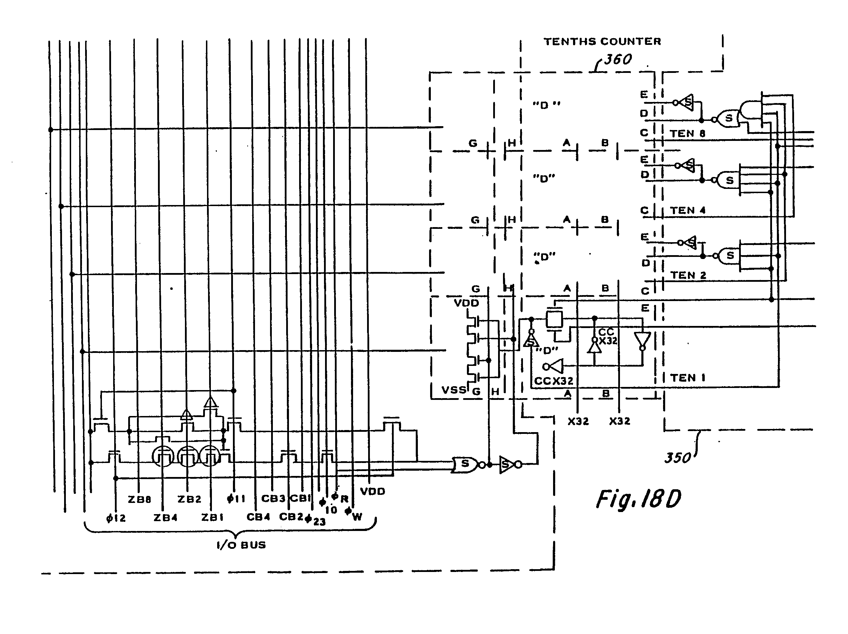

Referring to Fig. 17, the interrelationship of Fig. 18A-F is shown. The timekeeping logic 350 and associated address decode 360 of Fig. 14B is shown in greater detail in Figs. 18A-F. More specifically, the timekeeping logic 350 is shown in detail in Figs. 18A-F, and the associated address decode and coupling to the bus 335 is shown in Figs. 18A and D.

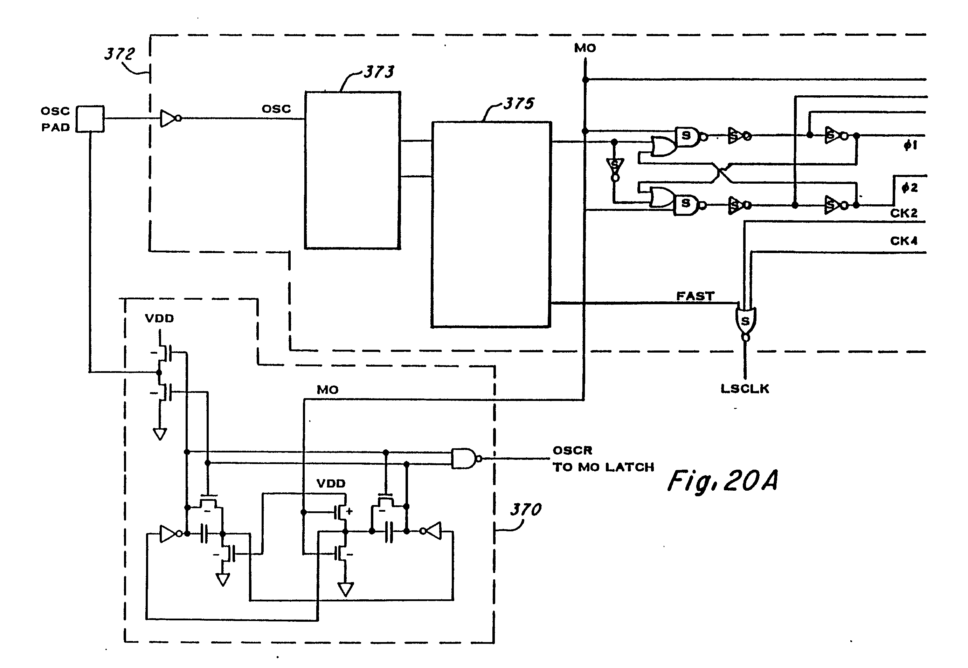

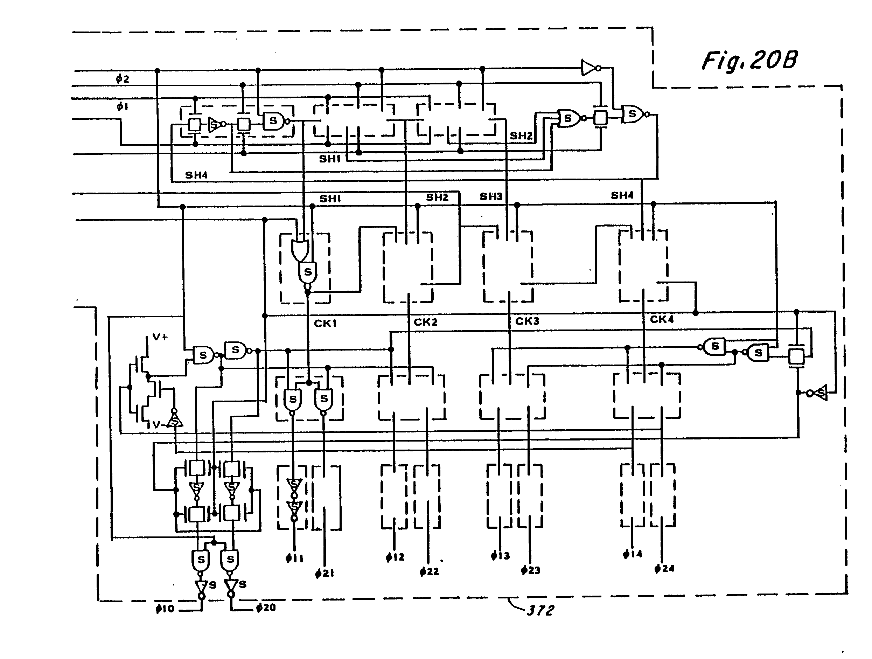

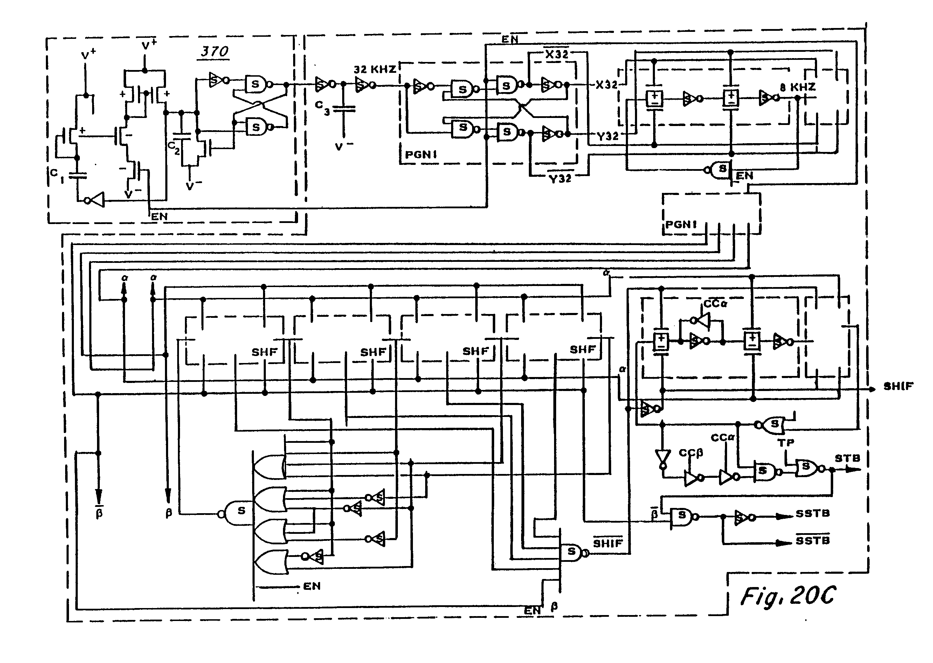

Referring to Fig. 19, the schematic interrelationship of Figs. 20A-B is shown. Referring to Figs. 20A—20C, a detailed schematic representation of the I/O oscillator 370, I/O clock generator 372, and logic associated therewith is shown, as described with reference to Fig. 14B. The Main (processor) oscillator 370, and associated divide logic 373 and speed select logic 375 is shown in Fig. 20A, with the main oscillator portion of the I/O oscillator 370 shown in Fig. 20C. The I/O Clock generator 372 is shown in Fig. 20C.

Referring to Fig. 21, the display voltage generator 374 of Fig. 14B is shown in greater detail. Also shown in Fig. 21 is a key as to schematic conventions used in the figures.

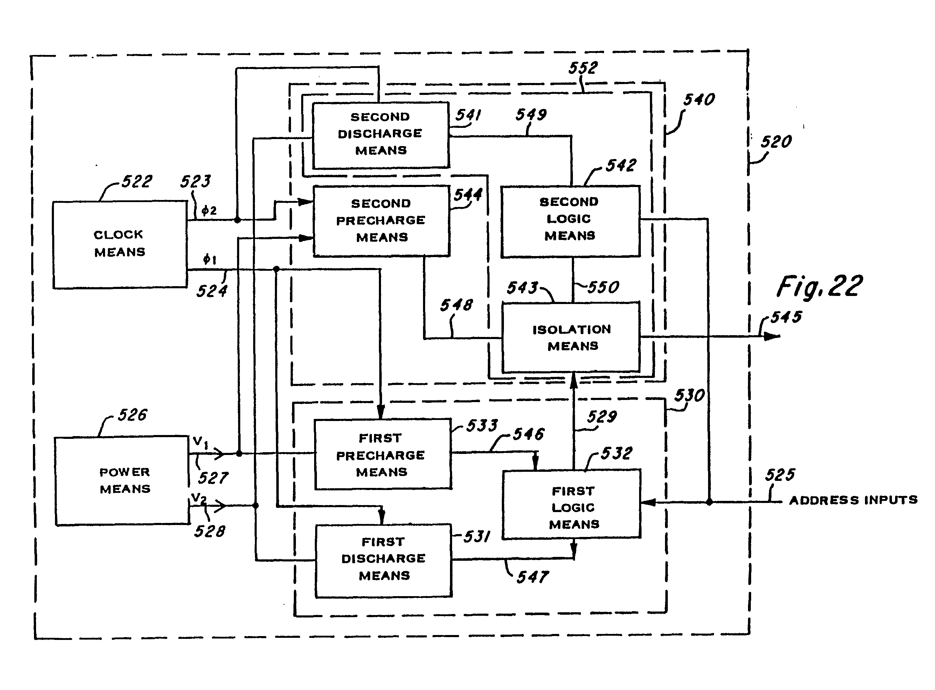

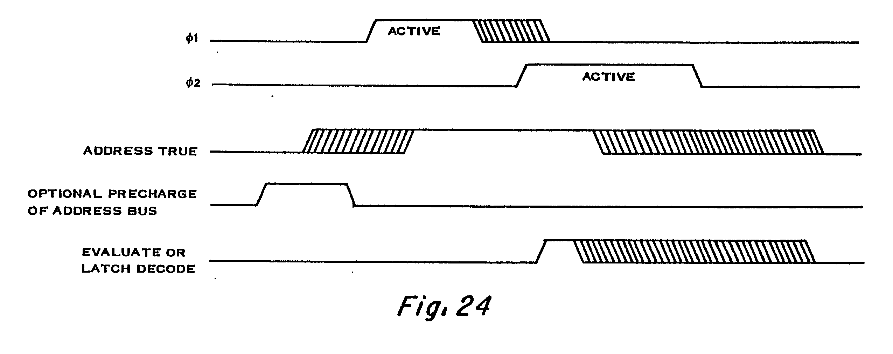

Referring to Fig. 22, a block diagram of the address decode means coupled to the I/O bus 335 and coupled to individual associated buffers of Fig. 14 is shown. Figs. 22—24 provide detailed schematics of the address decode circuits (i.e. 325, 312, 360 etc.) coupled to the bus 335 of Figs. 14A-B, and of Figs. 16a-d. Referring to Fig. 22, an address decode circuit having noncomplementary address inputs 525 is comprised of a first decode circuit means 530 for receiving the address inputs 525 and for selectively providing an active first decode output 529 in response to decoding a first logic level in a predefined combination from the received address inputs 525. A second decode circuit means 540 is coupled to the address inputs 525 for receiving the address inputs, and is coupled to the first decode means 530. The second decode means selectively provides an active second decode output 545 in response to coincidentally 1) decoding a second logic level in the predefined combination from the received address input and 2) receiving the active first decode output 529 from the first decode means 530. The active second decode output 545 is thereby indicative of the address inputs being at the desired predefined combination. In the preferred embodiment, the first decode means 530 and second decode means 540 are programmable so as to allow selection of the desired predefined combination at the first and second logic levels. In other words, the first decode means 530 and second decode means 540 may be selectively programmed, either by hardware programming during the processing of the integrated circuit. The address decode circuit 520 having noncomplementary address inputs may be further comprised of a clock circuit means 522 for providing a first clock output 524 and a second clock output 523, said clock means 522 providing active first and second clock outputs 524 and 523, respectively, having first and second active time intervals, respectively, as shown in the Fig. 24 with reference to Ø1, and Ø2, respectively. Additionally, the address decode circuit 520 may be comprised of power means 526 for providing a first voltage output 527 and a second voltage output 528 at a first and second voltage level $V_1$ and $V_2$, respectively. A first precharge circuit means 533, within the first decode means 530, is coupled to the first voltage output 527 of the power means 526 and to the first clock output 524 of the clock means 522, for selectively providing first voltage output of the power means 526 and to the first clock output 524 of the clock means 522, for selectively providing a first precharge output 546 during the active (first voltage level) clock output portion of the first active time interval, said first precharge output 546 being provided at the first voltage level in response to receiving the first clock output 524. A first discharge circuit means 531 within the first decode means 530 is coupled to the second voltage means 528 of the power means 526, and to the first clock output 524 of the clock means 522, for selectively coupling a received input 547 from a first logic means 532, within the first decode means 530, to the second voltage output 528 in response to receiving the active first clock output 524. The first logic circuit means 532 is coupled to the output 546 of the first precharge means 533 and provides the output 547 coupled to the first discharge means 531. The first logic means selectively isolates the received first precharge means output 546 from the output 547, coupled to the first discharge means 531, in response to receiving a predefined first combination of address inputs 525.

The second decode means 540 is further comprised of a second precharge circuit means 544, coupled to the first voltage output 527 of the power means 526 and coupled to the second clock output 523 of the clock means 522, for selectively providing a second precharge output 548 for the duration of the second active time interval, as shown with reference to Fig. 24 signal Ø2, providing the second precharge output 548 at the first voltage level in response to receiving the active second clock output 523. A second discharge circuit means 541 is coupled to the second voltage output 528 of the power means 526 and is coupled to the second clock output 523 of the clock means 522, for selectively coupling a received signal 549 to the second voltage output 528 in response to receiving the active second clock output 523. A second logic circuit means 542 is coupled to the second discharge means 541 for selectively coupling a received input 550 from an isolation means 543 via signal 549 to the input of the second discharge means 541 in response to receiving a predefined second combination of address inputs. The isolation means 543 is coupled to the second logic means 542, selectively coupling the received input 550 from the second logic means 542 as described infra. The isolation means 543 is also coupled to the output 548 from the second precharge means 544, and is also coupled to the first decode output 529 from the first logic circuit means 532. The isolation means 543 provides an output 545 indicative of the decode circuit 520 receiving a predefined combination on the received address inputs 525. The isolation means 543 provides the decode output 545 in response to receiving the second precharge output 548, and the active first decode output 529, when the second logic means 542 couples the received input 550 to the second discharge means input 549, thereby coupling the isolation means 543 to the second voltage output, and causing the output 545 from the isolation means 543 to be coupled to the second voltage

output $V_2$ thereby indicating a true decode of the desired address.

The controller chip integrated circuit of Figs. 14A-B has a plurality of addressable function modules and is comprised of address bus means, such as memory address X/common bus 340, for providing noncomplementary address outputs 525 and power bus means 526 for providing a first voltage output 527 at a first level and a second voltage output 528 at a second level as shown with reference to Figs. 22—24. The first precharge means 533 is coupled to the first voltage output 527 for providing an output 546 at the first level for a first time interval, as determined by the clock output 524 of the clock means 522. The first decode logic means 532 is coupled to the address inputs 525 and to the second voltage output 528 via the discharge means 531, and is coupled to the output 546 of the precharge means 533. The first decode means 530 includes means for selectively providing a first decode output 529 at the first level, during a second time interval commencing subsequent to the commencement of the first time interval, responsive to the clock means 522, when the received address inputs 525 are at a predefined combination. Additionally, the first decode means includes means for selectively providing the first decode output 529 at the second level during the second time interval when the received address outputs are not at the predefined combination. The second precharge means 544 is coupled to receive the first voltage output 527, for providing an output 548 at the first level for a third time interval commencing subsequent to the commencement of the second time interval, responsive to the clock means 522. A second decode means 542 is coupled to receive the address inputs 525, the second voltage output 528, and the second precharge means 544 output 548, and includes means for selectively providing an output 545 at the second level during the third time interval when the received address outputs are at the predefined combination, and further includes means for selectively providing the output 545 at the first level during the third time interval when the received address outputs are not at the predefined combination. The first time interval, second time interval, and third time interval as described above may be better understood by reference to the Ø1, Ø2, and latch decode signal waveforms of Fig. 24.

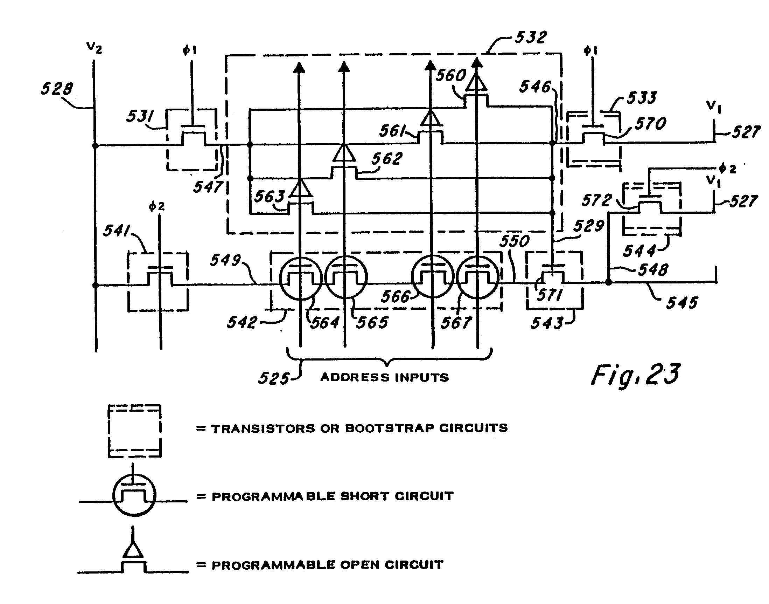

Referring to Fig. 23, a detailed schematic embodiment of the address decode circuit of Fig. 22 is shown. Corresponding functional blocks of Fig. 22 are appropriately numbered in Fig. 23. In this preferred embodiment, the first decode means 532 is comprised of an array of parallel transistors 560—561, the input to each of the transistors 560—563 in the array 532 being coupled to an independent and separate address input 525. In the preferred embodiment each transistor 560—563 is selectively open circuitable in response to a programmed first matrix input. That is, the transistors 560—563 in the array 532 may be selectively programmed, either during processing via mask level layout or after processing via electrical programming, so as to define the predefined combination of address inputs to which the first decode means 532 will respond. The second decode means 542 may be comprised of an array of transistors 564—567 in series connection, an input of each of the transistors 564—567 being coupled to an independent and separate address input 525, with each of the transistors 564—567 in the array being selectively short circuitable in response to receiving a programmed second matrix input. In a manner similar to that described above with reference to the first decode means, the programmability of the second decode means may be achieved via processing by mask level design and layout or ion implantation, or after processing of the integrated circuit by electrical programming. The function served by the first decode means 532 and the second decode means 542 is determined in part by the semiconductor process by which the devices are constructed.

For an N-channel process, the function of the first decode means 532 is to decode a predefined combination of zeros, that is second level voltage inputs, from the address inputs 525. In this embodiment, the individual transistors 560—563 are selectively programmed to be open circuited where it is not desired to decode the zero on the corresponding address input 525, and are not programmed to be open circuited, that is are left in tact in the array 532, where it is desired to decode a zero. When the address inputs 525 which are coupled to non-open circuited transistors in the array 532 contain a second level voltage input, the decode logic 532 will not couple the output 546 from the first precharge means 533 to the input 547 of the first discharge means 531, thereby preventing discharge of the first decode output 529, which is at the first voltage level after the first time interval because of the precharge action of transistor 570 of the first precharge means 533 coupling the first decode output 529 to the first voltage output 527. When the first decode output 529 is at the first level, the isolation means 543 is enabled, that is transistor 571 is turned on, thereby coupling the second precharge means output 548 to the second decode logic means 542. If a first voltage level output is present on the address inputs 525 which are coupled to the non-open circuited transistors of the array 532, then the output 529 is discharged to the second voltage output level, thereby disabling the isolation means 543, preventing the second precharge output 548 from coupling to the second decode means 542, and instead coupling the second precharge output 548 to the decode output 545, providing an output 545 at the first level, indicative of a false decode.

In this N-channel embodiment, the function of the second decode means 542 is to decode a predefined combination of ones, that is first voltage level outputs, received on the address inputs 525. The transistors 564—567 of the second decode means 542 are coupled in series connection, and are selectively programmable to be short circuited so as to in affect permanently select the short circuited transistor. The short circuits may be programmed by the same means as was described above with reference to the programmable open circuits. When the address inputs 525 which are coupled to the nonshortcircuited transistors of the second decode array 542 are at the first voltage level (ones), the transistors of the second decode array 542 are enabled, thereby providing a discharge path from the isolation means 543 to the second voltage output 528 of the discharge means 541. The discharge path via second discharge means 541 is not present until the second clock Ø2 activates the second discharge means 541, thereby allowing time for the first decode means 532 to perform its function and provide an active or inactive first decode output 529 according to the state of the address inputs 525. When the desired combination of the address inputs is provided to the first decode means 532 and to the second decode means 542, the isolation means 543 is enabled so as to couple the percharge voltage output 548 from the second precharge means 544 and the decode output 545 to the second decode means 542, which since it is selected, provides a serial discharge path via discharge means 541 to the second voltage 528, thereby discharging the decode output 545 to the second voltage level, providing an indication of a true address decode. The first discharge means 531 and second discharge means 541 provide power supply isolation during the corresponding precharge via the first precharge means 533 and second percharge means 544, respectively, of the first decode logic means 532, and second decode logic means 542, respectively. Alternatively, if the address bus is precharged to a low logic level prior to activation of the first precharge means 533, the first discharge means 531 may be eliminated and replaced by a short circuit to the second voltage level 528.

In a P-channel embodiment of the present invention, the first decode logic means 532 functions to decode the first logic level, ones, and the second decode logic means 542 functions to decode the second logic level, zeroes. The transistors 560—563 of the first decode means 532 are left coupled to those address inputs 525 upon which a one is desired to be decoded. All other transistors of the first decode means 532 are programmed open circuited independent of the address inputs 525. If all address lines 525 to which non-open circuited transistors of the first decode means 532 are coupled are at the first logic level, then the first decode output 529 will remain precharged to the first voltage level, as the first decode means 532 will provide isolation between the first precharge means 533 and the discharge means 531. If a second logic level, zero, is present on any of the address inputs 525 coupled to a non-open circuited transistor of the first decode means 532, then that transistor will be enabled, thereby coupling the first decode output 529 to the input of the first discharge means 531, thereby discharging the first decode output 529 to the second voltage output level 528, thereby disabling isolation transistor 571, and causing the decode output 545 to remain at the first voltage output level 527 responsive to the output of the second precharge means 548. However, when the first decode means 532 decodes the desired address, the first decode output 529 is at the active first voltage output level, and enables isolation transistor 543 so as to couple the second decode array 542 to the second precharge means 544 and to the output 545. The function of the second decode means 542, is to provide for decode of the second logic level, zeroes, in the P-channel embodiment. The transistors 564—567 of the second decode means 542 are selectively coupled to the address inputs 525 corresponding to the desired address lines which are desired to be at the first logic level, one. The remaining transistors in the second decode means 542 are programmed to be short circuited, so as to, in essence, be continuously activated. When the address inputs 525 coupled to the non-shortcircuited transistors of the second decode means 542 are at second logic level (zero), then the transistors to which those inputs are coupled will be activated, thereby providing a discharge path from the decode output 545 (and first precharge output 548) to the second voltage output level 528, via isolation means 543 and discharge means 541. The first discharge means 531 and second discharge means 541 provide power supply isolation during the precharge times of the first precharge means 533 and second precharge means 544. If the address inputs 525 are precharged to a high, first voltage level, before Ø1, that is before the first precharge means 533 is activated to thereby couple the first voltage output to the first decode means 532 and first decode output 529, then the first discharge means 531 will not be required, and may be replaced by a short circuit.

In a CMOS embodiment of the persent invention, the preferred embodiment, the function of the first decode means 532 and second decode means 542 is selected to be either the N-channel (second level true) or the P-channel (first level true) decode scheme. Additionally, in CMOS, no bootstraping circuitry is required for the precharge means 533 and 544, and, the precharge transistors 570 and 572 may be made complementary to the remainder of the decode circuitry. Additionally, in a manner similar to that for the P-channel and N-channel techniques, the first discharge means 531 may be eliminated if the address lines 525 are percharged to the offstate voltage of the decoder circuitry prior to the enablement of the first precharge means 533 by the first clock active level. Referring to Fig. 24, the signal timing diagram for the circuitry of Fig. 23 is shown. A first clock output Ø1, commences prior to the second clock output Ø2, and the decode true output becomes valid subsequent to the commencement of the second clock output Ø2. The address lines 525 must go to a valid true level

prior to the end of the active period of the first clock Ø1, and prior to the commencement of the active period of the second clock output Ø2. Additionally, the timing for the optional precharge of the address bus so as to eliminate the need for the first precharge means 531 is shown, requiring that the address bus be precharged prior to the commencement of the first clock output Ø1 active state.

With the non-complementary address decode invention as described with reference to Figs. 22—24, a minimum number of address lines are required to be provided on the address bus, thus minimizing the amount of space necessary for address bus runs on the integrated circuit. Furthermore design and layout may be implemented with minimum spacing between the address lines, since the power supply busses are on either side of the decode circuit, and there are no gates between the address lines, only transistors. This provides for a very space efficient layout, and minimizes bar size. A further savings is realized in that this address decode scheme overlays the address lines, thereby utilizing minimal bar area for decode circuitry beyond that required for the address lines themself.

Referring again to Fig. 16D, the I/O pulldown latch 331 will now be described in greater detail. The I/O buffers 330 and print I/O lines 324 each contain a means 331 for controlling the logic level of the bus lines to which the means 331 is coupled when there is no other active device controlling the bus lines. This is of particular importance when a communications protocol exists between integrated circuits coupled to the I/O bus lines. The I/O pulldown latch 331 controls the default state of a bus line to which it is coupled without requiring pullup or pulldown resistors and without requiring additional control lines. Referring to Fig. 25, a preferred embodiment of the I/O pulldown latch 331 is shown as contained within a controller integrated 600, the I/O pulldown latch 331 coupling to a bus line 601 which couples to a second integrated circuit 602. The pulldown latch may alternately be a separate integrated circuit. As described with reference to Fig. 16D, there are a plurality of I/O lines 601 and a plurality of I/O latches 331 each coupled to one of the control lines 601. Additionally there may be a plurality of integrated circuits 602, each integrated circuit coupling to the I/O bus lines 601. In the preferred embodiment, the read/write memory bit 609 (bus control memory bit) is coupled to the bus line 601 which is to be controlled, forming a transparent latch. Other forms of transparent latches may be utilized such as those in bipolar or MOS technology. A communications protocol is established wherein the last integrated circuit device, 600 or 602, to write onto the bus line 601 must set the bus line to the default (no-up) condition. However, this invention may also be utilized independent of the communication protocol. In the preferred embodiment, the default condition is a logic zero level. The bus control memory bit 609 is sized so that it may be overdriven by any driver attached to the bus line 601. Thus, the output buffer driver circuits of the integrated circuit 600 or of the integrated circuit 602 may overdrive and set the logic state of the tansparent latch 609. This approach has the advantage of dissipating virtually no power once the line has been set to one or the other logic level. In the preferred embodiment, only one bus line control bit 609 is coupled to any given bus line so as to ease the task of overdriving the bus line. The integrated circuit 602 may be RAM, ROM, or other I/O integrated circuits. A first driver means 606 provides an output at a fixed voltage level on the bus line 601 for a first time interval during which the controller circuit 600 is communicating information onto the bus 601. Upon completion of communication, the first means 606 causes its output to flow to a high impedance level, thereby allowing the voltage on the bus line 601 to float independent of the driver 606. The memory control bit 609 is coupled to the bus line 601, and stores the fixed voltage level output from the first means 606 during the first time interval as a result of the first means 606 overdriving the memory bit 609. During the subsequent time interval, when the first means 606 is allowing the voltage on the bus 601 to float independent of the means 606, the bus control memory bit 609 couples to the bus line 601 the stored fixed voltage level when it detects the floating non-fixed output condition. Thus, the last fixed voltage level present on the bus 601 is output from any integrated circuit, 600 or 602, coupled to the bus 601 as stored in the memory control bit 609, and the stored fixed voltage level is reoutput onto the bus 601 when none of the integrated circuits, 600 and 602, are providing a fixed voltage level output and all are allowing the bus to float. This I/O memory latch feature is of particular importance in microprocessor, computer oriented, calculator systems, and other bus oriented systems. Thus, the I/O memory latch of the present invention may be implemented in the calculator systems as described with reference to Figs. 1—4, and Figs. 5A-C, as well as utilized in combination with other inventions disclosed herein. The communication between the controller integrated circuits and the memory integrated circuits would be via the I/O bus, I/O bus 330 as shown in Figs. 5A-C, and the additional integrated circuits 602 would be the memory integrated circuits 103—107 coupled to the I/O bus.

The novel inventions disclosed herein may be utilized in calculators, learning aids, electronic games, personal computers, and other embodiments not specifically disclosed herein, but evident to one skilled in the art. The true scope of the invention may be better understood by reference to the appended claims.

## Claims

1. A method of manufacturing an integrated circuit of modular structure (Figs. 6—8, 11) formed on one surface of a semiconductor bar, said method comprising:

patterning on a replica of the integrated circuit to be manufactured as formed on said one surface of said semiconductor bar, a replica of a standard data processor circuit (126-Fig. 6) having an arithmetic logic unit (128), a program counter (135), memory pointers (130) and a permanent section of memory means (134, 143) including read/write (RAM) and read-only (ROM) memory electrically interconnected by a first interconnect means (122) in a manner facilitating expansion of the storage area accorded to said RAM and ROM memory means;

characterised in that the expansion of the storage area accorded to said RAM and ROM memory means is accomplished by patterning on the replica of the integrated circuit, a replica of additional RAM and ROM memory means in the form of partionable segmented modular blocks (142, 146);

electrically interconnecting on the replica of the integrated circuit the additional RAM and ROM memory means via second interconnect means with the replica of said standard data processor circuit in a manner so that individual modular blocks of additional RAM and ROM memory means may be removed from the replica of said integrated circuit without disturbing the electrical operation of said standard data processor circuit and any remaining segmented modular blocks of additional RAM and ROM memory means retained on the replica of said integrated circuit;

establishing a minimum memory requirement for the integrated circuit to be manufactured; and

if necessary, removing individual modular blocks of additional RAM and ROM memory means from the replica of said integrated circuit as memory storage in excess of said minimum memory requirement for the integrated circuit to be manufactured; and

transforming the replica into the integrated circuit.

2. A method of manufacturing an integrated circuit of modular structure as set forth in claim 1, further characterised by locating the patterned replica of said additional partitionable segmented modular blocks of ROM (146) adjacent a first edge of said semiconductor bar and adjacent a second edge of said semiconductor bar perpendicular to the first edge; and

locating the patterned replica of said additional partionable segmented modular blocks of RAM (142) adjacent to said second edge of said semiconductor bar and adjacent to a third edge of said semiconductor bar which is perpendicular to said second edge.

3. A method of manufacturing an integrated circuit of modular structure as set forth in claim 2, further characterised by providing scribe lines (150, 151) on the replica of the integrated circuit to be manufactured denoting the boundaries between adjacent modular blocks of additional RAM and ROM memory means; and

providing a semiconductor bar of reduced size on which the patterned replica of the integrated circuit to be manufactured is formed with reduced memory storage capacity of removing a selected number of individual modular blocks of additional RAM and ROM memory means from the patterned replica of the integrated circuit by separation along a particular scribe line.

4. A method of manufacturing an integrated circuit of modular structure as set forth in any of claims 1—3, further characterised in that transforming the replica into the integrated circuit is accomplished by generating a set of masks of said integrated circuit to be manufactured from the replica thereof;

processing a semiconductor slice using said set of masks; and

packaging and testing the resulting integrated circuit.

**Patentansprüche**

1. Verfahren zum Herstellen einer integrierten Schaltung mit modularer Struktur (Fig. 6 bis 8, 11) auf einer Fläche eines Halbleiterkörpers, wobei bei dem Verfahren auf einer Nachbildung einer herzustellenden integrierten Schaltung, wie sie auf der einen Fläche des Halbleiterkörpers gebildet wird, das Muster einer Nachbildung einer Standard-Datenverarbeitungsschaltung (126, Fig. 6) mit einem Rechenwerk (128), einem Programmzähler (135), Speicherzeigern (130) und einem permanenten Abschnitt aus Speichermitteln (134, 143) mit Schreib/Lese-Spechern (RAM) und Festspeichern (ROM) gebildet wird, die durch ein erstes Verbindungsmittel (122) so elektrisch miteinander verbunden sind, daß die Erweiterung des den RAM- und ROM-Speichermitteln zugeordneten Speicherbereichs erleichtert wird, dadurch gekennzeichnet, daß die Erweiterung des den RAM- und ROM-Speichermitteln zugeordneten Speicherbereichs dadurch erzielt wird, daß auf der Nachbildung der integrierten Schaltung das Muster einer Nachbildung zusätzlicher RAM- und ROM-Speichermittel in Form teilbarer, segmentierter modularer Blöcke (142, 146) gebildet wird; daß auf der Nachbildung der integrierten Schaltung die zusätzlichen RAM- und ROM-Speichermittel über zweite Verbindungsmittel mit der Nachbildung der Standard-Datenverarbeitungsschaltung elektrisch so verbunden werden, daß einzelne modulare Blöcke zusätzlicher RAM- und ROM-Speichermittel von der Nachbildung der integrierten Schaltung entfernt werden können, ohne daß der elektrische Betrieb der Standard-Datenverarbeitungsschaltung sowie verbleibender segmentierter modularer Blöcke zusätzlicher RAM- und ROM-Speichermittel gestört wird, die auf der Nachbildung der integrierten Schaltung verbleiben, daß ein Minimum-Speicherbedarf für die herzustellende integrierte Schaltung erstellt wird und daß, falls notwendig, einzelne modulare Blöcke zusätzlicher RAM- und ROM-Speichermittel von der Nachbildung der integrierten Schaltung als Speicher über dem Minimum-Speicherbedarf für die herzustellende integrierte Schaltung entfernt werden, und daß die Nachbildung in eine integrierte Schaltung umgewandelt wird.

2. Verfahren zum Herstellen einer integrierten Schaltung mit modularer Struktur nach Anspruch

1, ferner dadurch gekennzeichnet, daß auf der gemusterten Nachbildung der zusätzlichen teilbaren, segmentierten, modularen ROM-Blöcke (146) angrenzend an einen ersten Rand des Halbleiterkörpers und angrenzend an einen zweiten, zu dem ersten Rand senkrechten Rand des Halbleiterkörpers angeordnet wird, und daß die gemusterte Nachbildung der zusätzlichen geteilten, segmentierten, modularen RAM-Blöcke (142) angrenzend an den zweiten Rand des Halbleiterkörpers und angrenzend an einen dritten, zum zweiten Rand senkrechten Rand des Halbleiterkörpers angeordnet wird.

3. Verfahren zum Herstellen einer integrierten Schaltung mit modularer Struktur nach Anspruch 2, ferner dadurch gekennzeichnet, daß auf der Nachbildung der herzustellenden integrierten Schaltung Anreißlinien (150, 151) vorgesehen werden, die die Grenzen zwischen benachbarten modularen Blöcken zusätzlicher RAM- und ROM-Speichermittel angeben, und daß ein Halbleiterkörper mit reduzierter Größe vorgesehen wird, auf dem die gemusterte Nachbildung der herzustellenden integrierten Schaltung mit reduzierter Speicherkapazität durch Entfernen einer ausgewählten Anzahl einzelner modularer Blöcke zusätzlicher RAM- und ROM-Speichermittel von der gemusterten Nachbildung der integrierten Schaltung durch Trennen längs einer bestimmten Anreißlinie hergestellt wird.

4. Verfahren zum Herstellen einer integrierten Schaltung mit modularer Struktur nach einem der Ansprüche 1 bis 3, ferner dadurch gekennzeichnet, daß das Umwandeln der Nachbildung in eine integrierte Schaltung erzielt wird, indem ein Maskensatz der herzustellenden integrierten Schaltung aus ihrer Nachbildung erzeugt wird, daß eine Halbleiterscheibe unter Verwendung des Maskensatzes bearbeitet wird und daß die sich ergebende integrierte Schaltung mit einem Gehäuse versehen und getestet wird.

**Revendications**

1. Procédé de fabrication d'un circuit intégré de structure modulaire (Figures 6—8, 11) formé sur une surface d'une barrette semi-conductrice, ledit procédé comprenant:
la mise en forme sur une réplique du circuit intégré à fabriquer, tel que formé sur une surface de ladite barrette semi-conductrice, d'une réplique d'un circuit de processeur de données standard (126-Figure 6) ayant une unité logique et arithmétique (128), un compteur de programme (135), des indicateurs de mémoire (130) et une section permanente de moyens de mémoire (134, 143) comprenant une mémoire à lecture/écriture (RAM) et une mémoire permanente (ROM) interconnectées électriquement par des premiers moyens d'interconnexion (122) d'une manière qui facilite l'extension de la zone de mémorisation accordée auxdits moyens de mémoire RAM et ROM;

caractérisé en ce que l'extension de la zone de mémorisation accordée auxdits moyens de mémoire RAM et ROM se fait en mettant en forme sur la réplique de circuit intégré, une réplique de moyens supplémentaires de mémoire de RAM et ROM sous la forme de blocs modulaires segmentés, pouvant être séparés (142, 146); en réalisant l'interconnexion électrique sur la réplique du circuit intégré des moyens de mémoire supplémentaires RAM et ROM par des seconds moyens d'interconnexion avec la réplique dudit circuit standard de processeur de données de manière que les blocs modulaires individuels de moyens supplémentaires de mémoire RAM et ROM puissent être enlevés de la réplique dudit circuit intégré sans perturber le fonctionnement électrique dudit circuit standard de processeur de données et des blocs modulaires segmentés qui subsistent des moyens supplémentaires de mémoire RAM et ROM qui sont conservés sur la réplique dudit circuit intégré;

en établissant une condition de mémoire minimale pour le circuit intégré à fabriquer; et

en elevant, si nécessaire, des blocs modulaires individuels des moyens supplémentaires de mémoire RAM et ROM de la réplique dudit circuit intégré comme une mise en mémoire dépassant ladite condition de mémoire minimale pour le circuit intégré à fabriquer; et

en transformant la réplique en un circuit intégré.

2. Procédé de fabrication d'un circuit intégré de structure modulaire selon la revendication 1, caractérisé en outre en ce qu'il consiste à positionner la réplique mise en forme desdits blocs modulaires segmentés supplémentaires pouvant être séparés de ROM (146) près d'un premier bord de ladite barrette semiconductrice et voisins d'un second bord de ladite barrette semi-conductrice perpendiculaire au premier bord; et

à positionner la réplique mise en forme desdits blocs modulaires segmentés supplémentaires pouvant être séparés de RAM (142) près dudit second bord de ladite barrette semiconductrice et près d'un troisième bord de ladite barrette semi-conductrice qui est perpendiculaire audit second bord.

3. Procédé de fabrication d'un circuit intégré de structure modulaire selon la revendication 2, caractérisé en ce qu'il consiste en outre à prévoir des lignes de coupe (150, 151) sur la réplique du circuit intégré à fabriquer, indiquant les limites entre des blocs modulaires voisins des moyens supplémentaires de mémoire RAM et ROM; et

à prévoir une barrette semi-conductrice de dimensions réduites sur laquelle la réplique mise en forme du circuit intégré à fabriquer est formée avec une capacité réduite de mise en mémoire, d'enlèvement d'un nombre sélectionné de blocs modulaires individuels des moyens supplémentaires de mémoire RAM et ROM de la réplique mise en forme du circuit intégré par une séparation le long d'une ligne de coupe particulière.

4. Procédé de fabrication d'un circuit intégré de structure modulaire selon l'une quelconque des revendications 1 à 3, caractérisé en outre en ce que la transformation de la réplique en un circuit intégré est faite en produisant un ensemble de masques dudit circuit intégré à fabriquer à partir de sa réplique;

en traitant une tranche semi-conductrice en utilisant ledit ensemble de masques; et

en traitant sous boîtier et en contrôlant le circuit intégré résultant.

*Fig. 1*

*Fig. 2*

*Fig. 3*

CONNECTOR

DISPLAY, 3

2

16

10  11

12

CROM/CRAM
MODULES

22  23

DISPLAY
DRIVER

17

80  DISPLAY

40  DISPLAY
INTERFACE
MEANS

60  EXTERNAL
STIMULUS
MEANS

30  CONTROLLER
MEANS

70  EXTERNAL
REREPHERAL
MEANS

50  SYSTEM
MEMORY
MEANS

*Fig. 4A*

2

Fig. 4B

*60* KEYBOARD

*70* PRINTER / OTHER I/O

*30* *31* CONTROLLER I

*80* 1ST 8 DIGITS OF DISPLAY / NTH 8 DIGITS OF DISPLAY

*40* *41* DISPLAY DRIVER I (MASTER) / *42* DISPLAY DRIVER N (SLAVE)

*31* CONTROLLER N

*35*

*50* RAM OR ROM I / RAM OR ROM M / PLUG IN MEMORY I / PLUG IN MEMORY P

EP 0 041 351 B1

3

Fig. 4C

EP 0 041 351 B1

*Fig. 4D*

UNIVERSAL ALGORITH CONTROLLER

KEYBOARD — 60

62

DATA PROCESSING MEANS — 34

MICROCODE

38

40

32

DISPLAY — 80

CONVERSION MEANS — 36

MACHINE CODE — 37

KEY DECODE OUTPUT — 39

COMMAND CONTROL MEANS — 53

MEMORY MEANS

PRODUCT DEFINITION CROM

MACROCODE — 54

52

*Fig. 5A*

Fig.5B

7

Fig. 5C

8

Fig. 6

Fig. 7

155

Fig. 8

Fig. 9

Fig. 10

*Fig. 11*

Set up means to
pattern replica

↓

Pattern First circuit means -
common fixed logic -
on replica

↓

Pattern second circuit means -
electronic circuit modules -
on replica

↓

Physically position second circuit
modules for modularity

↓

Electrically interconnect first
and second circuit means
on replica

↓

Remove selected modules
from replica

↓

Replace removed modules with
other desired functional
modules

Pattern on replica
pinout definition means

↓

Reduce the replica in size
proportionate to removed modules

↓

Transform replica to
integrated circuit

14

**Fig.12A**

MEMORY MAPPED I/O BUS
210

CLOCK LINES 211
ADDRESS BUS 212
DATA BUS 213
POWER BUS 214
DISPLAY VOLTAGE BUS 215

225 — ADDRESS DECODE LOGIC FOR BUFFER 1
226 — ADDRESS DECODE LOGIC FOR BUFFER 2
227 — ADDRESS DECODE LOGIC FOR BUFFER 3
228 — ADDRESS DECODE LOGIC FOR BUFFER 4

BUFFER 1 220 | BUFFER 2 221 | BUFFER 3 222 | BUFFER 4 223
234 | 235 | 236 | 237
230 | 231 | 232 | 233   } OUTPUT PADS

**Fig.12B**

212
MULTIPLEXED COMMON TIME

DATA BUS 4
MEMORY ADDRESS Z BUS 4 — 213
MEMORY ADDRESS X BUS 4 — 216
CLOCK LINES 6 — 217
POWER LINES 2 — 211
DISPLAY VOLTAGE LINES 2 — 214
215

225 — ADDRESS DECODE LOGIC FOR BUFFER 1
226 — ADDRESS DECODE LOGIC FOR BUFFER 2
227 — ADDRESS DECODE LOGIC FOR BUFFER 3
228 — ADDRESS DECODE LOGIC FOR BUFFER 4

MEMORY MAPPED I/O BUS 210

BUFFER 1 220 | BUFFER 2 221 | BUFFER 3 222 | BUFFER 4 223
234 | 235 | 236 | 237
230 | 231 | 232 | 233   } OUTPUT PADS

Fig. 13

Fig. 13A

Fig. 13B

EP 0 041 351 B1

Fig. 14A

Fig. 14B

| | |
|---|---|
| Fig. 16A | Fig. 16B |
| Fig. 16C | Fig. 16D |

Fig. 15

| | | |
|---|---|---|
| Fig. 18A | Fig. 18B | Fig. 18C |
| Fig. 18D | Fig. 18E | Fig. 18F |
| Fig. 18G | | |

Fig. 17

| | |
|---|---|
| Fig. 20A | Fig. 20B |

| |
|---|
| Fig. 20C |

Fig. 19

Fig.16A

Fig.16B

21

Fig. 16C

EP 0 041 351 B1

Fig. 16D

EP 0 041 351 B1

Fig. 18A

Fig. 18B

Fig. 18C

Fig.18D

Fig. 18E

Fig. 18F

Fig. 20A

EP 0 041 351 B1

Fig.20B

Fig. 20C

EP 0 041 351 B1

Fig. 21

Fig.22

Fig. 23

⬚ = TRANSISTORS OR BOOTSTRAP CIRCUITS

⊙ = PROGRAMMABLE SHORT CIRCUIT

△ = PROGRAMMABLE OPEN CIRCUIT

ADDRESS INPUTS

EP 0 041 351 B1

Fig. 24

EP 0 041 351 B1

Fig. 25